(19) Europäisches Patentamt
European Patent Office
Office européen des brevets

(11) **EP 4 447 547 A2**

(12) # EUROPEAN PATENT APPLICATION

(43) Date of publication:
**16.10.2024 Bulletin 2024/42**

(21) Application number: **24189839.4**

(22) Date of filing: **14.10.2021**

(51) International Patent Classification (IPC):
***H04W 36/00*** *(2009.01)*

(52) Cooperative Patent Classification (CPC):
**H04W 24/08; H04L 5/0048; H04W 36/0085;**
**H04W 36/033; H04W 40/12; H04W 40/22;**
**H04W 52/0216; H04W 52/0219; H04W 52/0229;**
**H04W 52/028;** H04L 5/0091; H04W 48/20;
H04W 76/28; H04W 88/04; H04W 92/18; (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.10.2020 CN 202011135717**
**15.01.2021 CN 202110055685**
**21.05.2021 CN 202110558795**

(62) Document number(s) of the earlier application(s) in
accordance with Art. 76 EPC:
**21883114.7 / 4 209 046**

(71) Applicant: **Samsung Electronics Co., Ltd**
**Suwon-si, Gyeonggi-do 16677 (KR)**

(72) Inventors:
• **ZHOU, Miao**
**16677 Suwon-Si (KR)**
• **SUN, Feifei**
**16677 Suwon-Si (KR)**
• **WU, Min**
**16677 Suwon-Si (KR)**

(74) Representative: **Nederlandsch Octrooibureau**
**P.O. Box 29720**
**2502 LS The Hague (NL)**

Remarks:
This application was filed on 19.07.2024 as a
divisional application to the application mentioned
under INID code 62.

(54) **METHOD AND TERMINAL FOR MEASUREMENT IN WIRELESS COMMUNICATION SYSTEM**

(57) The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. The present disclosure relates to a method and terminal for measurement in a wireless communication system are disclosed.

(52) Cooperative Patent Classification (CPC): (Cont.)
    Y02D 30/70

# Description

## [Technical Field]

The present application relates to the technical field of wireless communication, and in particular to a measurement method and a terminal in a wireless communication system.

## [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

In order to satisfy the increasing demand for wireless data communication services since the deployment of 4G communication systems, efforts have been made to develop improved 5G or pre-5G communication systems. Therefore, 5G or pre-5G communication systems are also called "Beyond 4G networks" or "Post-LTE systems".

In order to achieve a higher data rate, 5G communication systems are implemented in higher frequency (millimeter, mmWave) bands, e.g., 60 GHz bands. In order to reduce propagation loss of radio waves and increase a transmission distance, technologies such as beamforming, massive multiple-input multiple-output (MIMO), full-dimensional MIMO (FD-MIMO), array antenna, analog beamforming and large-scale antenna are discussed in 5G communication systems.

In addition, in 5G communication systems, developments of system network improvement are underway based on advanced small cell, cloud radio access network (RAN), ultra-dense network, device-to-device (D2D) communication, wireless backhaul, mobile network, cooperative communication, coordinated multipoints (CoMP), reception-end interference cancellation, etc.

In 5G systems, hybrid FSK and QAM modulation (FQAM) and sliding window superposition coding (SWSC) as advanced coding modulation (ACM), and filter bank multicarrier (FBMC), non-orthogonal multiple access (NOMA) and sparse code multiple access (SCMA) as advanced access technologies have been developed.

## [Disclosure of Invention]

## [Technical Problem]

Generally, a sidelink UE needs to keep monitoring on a configured whole resource pool, which will cause large power consumption. In addition, channel sensing is usually based on a premise that the UE monitors and caches the resource pool, so channel sensing has certain requirements for UE's monitoring behavior and caching ability. UEs that are sensitive to power consumption and may have weak caching ability will be introduced in the future versions, which may not be suitable to adopt the current mechanism.

Compared with a mechanism that a UE always keeps monitoring on a resource pool in Rel-16, in order to make the sidelink system more widely applicable to various kind of devices, especially devices that rely on batteries and are relatively sensitive to power consumption, such as handheld terminals, it is necessary to introduce a mechanism that is suitable for the sidelink system and may make the UE turn off a transmission/reception function regularly so that power consumption is reduced.

**[Solution to Problem]**

An embodiment of the present disclosure provides a measurement method in a wireless communication system, including: receiving, by a first UE, a signal or channel from a second UE; measuring, by the first UE, the signal or channel when the signal or channel is measurable to determine a relay node; and determining, by the first UE, whether to select the second UE as the relay node and/or whether to continue to use the second UE as the relay node according to a measurement result.

In some implementations, the method further includes: determining, by the first UE, whether the signal or channel is measurable to determine the relay node, wherein the determining, by the first UE, whether the signal or channel is measurable to determine the relay node including using at least one of the following methods to determine whether the signal or channel is measurable to determine the relay node: determining based on a resource pool; determining based on an identity of the second UE; determining based on a resource in which the signal or channel is received; determining based on an indication carried in or corresponding to the signal or channel; determining based on a type of the signal or channel; and determining based on a selected relay node.

In some implementations, the indication carried in or corresponding to the signal or channel includes at least one of: an indication in RRC signaling; an indication in MAC signaling; an indication based on an SCI format; an indication field in SCI; and a sequence for scrambling.

In some implementations, the method further includes: triggering, by the first UE, the second UE to transmit the signal or channel for measurement of the relay node; and determining ,by the first UE, that the signal or channel is measurable to determine the relay node after receiving the signal or channel that the second node is triggered to transmit.

In some implementations, the signal or channel includes at least one signal or channel of the following signals or channels: a reference signal of a PSCCH, a reference signal of a PSSCH, an S-SSB, a PSBCH block, a reference signal of the PSBCH block, the PSCCH, the PSSCH and a PSFCH, and wherein the reference signal of the PSBCH block and/or the PSCCH and/or the PSSCH include at least one of: a DMRS, a CSI-RS and a PT-RS.

In some implementations, when a predetermined condition is satisfied, at least one behavior of the following behaviors is performed by the first UE: measuring the reference signal and/or the SSB and/or the PSFCH, and generating a measurement result based on RSRP and/or RSRQ; and measuring any one or more of the at least one signal or channel, and generating a measurement result based on RSSI.

In some implementations, satisfying the predetermined condition includes at least one of: the first UE being configured by a base station or a higher layer to perform the at least one behavior; the first UE being preconfigured or predefined to perform the at least one behavior; and the method of determining that the signal or channel is measurable to determine the relay node corresponding to the at least one behavior.

In some implementations, the method further includes: determining whether to select the second UE as the relay node and/or whether to continue to use the second UE as the relay node based on feedback information of transmission with the second UE, wherein the feedback information includes at least one of: HARQ-ACK feedback, and CSI feedback.

In some implementations, the method further includes: transmitting, by the first UE, a determination result to a third node after determining whether to select the second UE as the relay node and/or whether to continue to use the second UE as the relay node.

In some implementations, the third node includes at least one of: the first UE itself; the second UE; other UEs supporting sidelink; and a base station.

In some implementations, a manner of transmitting the determination result to the third node includes at least one of: transmitting a control channel and/or SCI, and indicating the determination result in the control channel and/or SCI; transmitting higher layer signaling, and indicating the determination result in the higher layer signaling; and transmitting a PSFCH, and indicating the determination result in the PSFCH.

An embodiment of the present disclosure provides a measurement method in a wireless communication system, including: generating, by a second UE, a signal or channel; and transmitting, by the second UE, the signal or channel when the signal or channel is measurable by other nodes to determine a relay node.

In some implementations, the method further includes: determining, by the second UE, whether the signal or channel is measurable by other nodes to determine the relay node, wherein the determining, by the second UE, whether the signal or channel is measurable by other nodes to determine the relay node including using at least one of the following methods to determine whether the signal or channel is measurable by other nodes to determine the relay node: determining based on a resource pool; determining based on an identity of a first UE; determining based on a resource for transmitting the signal or channel; determining based on an indication carried in or corresponding to the signal or channel; determining based on a type of the signal or channel; and determining based on a selected remote node, wherein the selected remote node includes other nodes that select the second UE as the relay node.

In some implementations, the indication carried in or corresponding to the signal or channel includes at least one of: an indication in RRC signaling; an indication in MAC signaling; an indication based on an SCI format; an indication field in SCI; and a sequence for scrambling.

In some implementations, the method further includes: receiving, by the second UE, trigger signaling from the first UE, wherein the trigger signaling is used to trigger the second UE to transmit the signal or channel available for measurement of the relay node; and transmitting, by the second UE, the signal or channel to the first UE, and determining that the signal or channel is measurable by other nodes to determine the relay node, after receiving the trigger signaling.

In some implementations, the method further includes: indicating, by the second UE, that the signal or channel is measurable by other nodes to determine the relay node, wherein indicating, by the second UE, that the signal or channel is measurable by other nodes to determine the relay node including indicating in the signal or channel.

In some implementations, the method further includes: receiving, by the second UE, a determination result from the first UE after transmitting the signal or channel; and determining, by the second UE, whether the first UE selects the second UE as the relay node and/or whether the first UE continues to use the second UE as the relay node according to the determination result.

In some implementations, a manner of receiving the determination result includes at least one of: receiving a control channel and/or SCI from the first UE, and acquiring the determination result indicated in the control channel and/or SCI; receiving higher layer signaling from the first UE, and acquiring the determination result indicated in the higher layer signaling; and receiving a PSFCH from the first UE, and acquiring the determination result indicated in the PSFCH.

An embodiment of the present disclosure provides a measurement method in a wireless communication system, including: determining, by a first UE, whether to select a second UE as a relay node and/or whether to continue to use the second UE as the relay node based on feedback information of transmission with the second UE, wherein the feedback information includes at least one of: HARQ-ACK feedback, and CSI feedback.

An embodiment of the present disclosure provides a power saving method in a sidelink system, including: acquiring a power saving configuration associated with a sidelink channel; and performing, based on the power saving configuration, at least one of: measurement associated with the sidelink channel; transmission associated with the sidelink channel; and reception associated with the sidelink channel.

In some implementations, the performing of the measurement associated with the sidelink channel based on the power saving configuration includes: determining resources to be used for transmitting the sidelink channel; determining one or more resource ranges for the measurement associated with the sidelink channel based on the resources and the power saving configuration; and performing the measurement on resources within the one or more resource ranges.

In some implementations, the determining of the one or more resource ranges for the measurement associated with the sidelink channel based on the resources and the power saving configuration includes: for at least one of the one or more resource ranges: determining at least two of a length of the resource range, a start position of the resource range and an end position of the resource range; and determining the resource range based on at least two of the length, start position and end position of the resource range, wherein the length of the resource range is determined based on the power saving configuration, and the start position of the resource range and the end position of the resource range are determined based on the resources or based on the resources and the power saving configuration.

In some implementations, the determining of the length of the resource range includes: determining the length of the resource range as a first length in a case where power saving characteristic is not enabled; and determining the length of the resource range as a second length different from the first length in a case where the power saving characteristic is enabled, wherein the second length is determined based on the power saving configuration.

In some implementations, the determining of the length of the resource range includes: determining the length of the resource range as a first length when power saving characteristic is not enabled; and determining a scaling factor associated with the length of the resource range based on the power saving configuration and determining the length of the resource range as a third length in a case where the power saving characteristic is enabled, wherein the third length is determined based on the first length and the scaling factor.

In some implementations, the scaling factor is determined based on at least one of: an indication of the scaling factor configured by a base station; an indication of the scaling factor configured by a higher layer; a timing length of at least one timer associated with a discontinuous transmission configuration; and a length of a discontinuous transmission cycle.

In some implementations, the determining of the one or more resource ranges for the measurement associated with the sidelink channel based on the resources and the power saving configuration includes: for at least one of the one or more resource ranges, determining a length of the resource range based on the power saving configuration; determining at least one of a start position and an end position of the resource range based on the resources or based on the resources and the power saving configuration; determining a specific condition associated with resource ranges for the measurement associated with the sidelink channel; and determining the resource range based on one of the start position and the end position of the resource range, the length of the resource range and the specific condition, wherein each resource within the resource range satisfies the specific condition, and wherein the specific condition includes that corresponding resources can be included in the resource range based on the power saving configuration.

In some implementations, the second length is determined based on a priority corresponding to the sidelink channel.

In some implementations, the scaling factor is determined based on a priority corresponding to the sidelink channel.

In some implementations, the performing of the measurement on resources within the one or more resource ranges includes any of: performing the measurement on all resources within the one or more resource ranges; performing the measurement on resources within the one or more resource ranges where a user equipment is in an active state; and determining a timer indicating whether the measurement can be performed, and performing the measurement on resources within the one or more resource ranges where the timer is running.

In some implementations, the method includes: determining a total length of resource ranges for the measurement associated with the sidelink channel; determining one of the one or more resource ranges as a first resource range for the measurement associated with the sidelink channel; and determining a second resource range for the measurement associated with the sidelink channel based on the total length and the first resource range, wherein the total length is a sum of a length of the first resource range and a length of the second resource range.

In some implementations, the measurement associated with the sidelink channel includes sidelink channel busy ratio measurement associated with the sidelink channel and/or sidelink channel occupancy ratio measurement associated with the sidelink channel.

In some implementations, the acquiring of the power saving configuration includes acquiring a sidelink discontinuous transmission configuration associated with the sidelink channel, wherein the sidelink discontinuous transmission configuration includes one or more timers respectively indicating active periods corresponding to at least one of the measurement, transmission and reception associated with the sidelink channel.

In some implementations, the user equipment is in an active period when at least one of the following conditions is satisfied: a timer corresponding to the transmission of the sidelink channel being running; a timer corresponding to the reception of the sidelink channel being running; a timer corresponding to the measurement of the sidelink channel being running; the transmission of the sidelink channel being performed; the reception of the sidelink channel being performed; the measurement of the sidelink channel being performed; there being data arrival at a higher layer or data existing in a hybrid automatic repeat request cache; and there being data arrival at a higher layer or data existing in a hybrid automatic repeat request cache and a latest transmission time satisfying a delay requirement of the data being earlier than a next active period.

In some implementations, the sidelink discontinuous transmission configuration includes one or more timers corresponding to reception and/or transmission of at least one of: a physical downlink control channel; a physical downlink shared channel; a physical uplink control channel; a physical uplink shared channel; a physical sidelink control channel; a physical sidelink shared channel; a physical sidelink feedback channel; a sidelink synchronization signal block; a physical sidelink broadcast channel.

In some implementations, the acquiring of the power saving configuration includes acquiring a plurality of discontinuous transmission configurations associated with a specific channel, wherein an active period of the specific channel is determined based on at least one of: determining an intersection of active periods of the specific channel indicated by each of the plurality of discontinuous transmission configurations as the active period of the specific channel; determining a union of active periods of the specific channels indicated by each of the plurality of discontinuous transmission configurations as the active period of the specific channel; determining, in the plurality of discontinuous transmission configurations, active periods of the specific channel indicated by each discontinuous transmission configuration as the active period of the specific channel in a specific system corresponding to the discontinuous transmission configuration; and determining an active period corresponding to a specific node as the active period of the specific channel in a case where the specific channel is associated with the specific node.

In some implementations, the performing of the transmission and/or reception associated with the sidelink channel based on the power saving configuration includes: acquiring scheduling information of resources for the transmission and/or reception of the sidelink channel, and in a case where the resources are in inactive periods of the user equipment, determining whether to perform the transmission and/or reception of the sidelink channel on the resources in the inactive periods based on at least one of: a priority corresponding to the sidelink channel; a delay requirement corresponding to the sidelink channel; and a channel type corresponding to the sidelink channel.

In some implementations, the method further includes: starting a specific discontinuous transmission timer if the transmission and/or reception of the sidelink channel is performed on the resources in the inactive periods, and determining, within a running time of the specific discontinuous transmission timer, the user equipment as being in the active period.

In some implementations, the method further includes: acquiring scheduling information associated with the sidelink channel that indicates a specific discontinuous transmission timer, and determining, within a running time of the specific discontinuous transmission timer, the user equipment as being in the active period.

An embodiment of the present disclosure provides a terminal, including: a transceiver for transmitting and receiving signals; a processor; and a memory storing instructions executable by the processor that, when executed by the processor, cause the processor to perform the aforementioned methods.

An embodiment of the present disclosure provides a user equipment in a sidelink system, including: a transceiver configured to transmit and receive signals to and from the outside; and a processor configured to control the transceiver to perform the methods according to the embodiments of the present disclosure.

An embodiment of the present disclosure provides a computer-readable medium having computer-readable instructions stored thereon that, when executed by a processor, are used to implement the methods according to the embodiments of the present disclosure.

The present application provides a method for a sidelink terminal as a remote node to select a suitable relay node based on measurement of a signal/channel of a relay node in a sidelink communication system. The method may enable the remote node to select the relay node according to communication link quality, thereby improving the reliability of relay-based sidelink communication.

The present application provides a method for a UE to perform resource pool load measurement after introducing a power saving mechanism into a sidelink system. The method enables a UE in which a power saving characteristic is enabled to measure a load degree of a resource pool normally, thus accurately estimating a busy degree of the resource pool, and correspondingly performing adaptive transmission, thereby ensuring that a DTX mechanism will not cause serious negative impact on the performance of sidelink communication.

[Advantageous Effects of Invention]

A method and apparatus for measurement in wireless communication system is provided according to the embodiment of the present disclosure.

[Brief Description of Drawings]

In order to explain the technical solution of embodiments of the present disclosure more clearly, the drawings of the embodiments will be briefly introduced below, and apparently, the drawings in the following description only relate to some embodiments of the present disclosure, but do not limit the present disclosure. In the drawings:

FIG. 1 illustrates a schematic diagram of an example wireless network according to various embodiments of the present disclosure;

FIGS. 2A and 2B illustrate example wireless transmit and receive paths according to various embodiments of the present disclosure;

FIG. 3A illustrates an example user equipment (UE) according to various embodiments of the present disclosure;

FIG. 3B illustrates an example gNB according to various embodiments of the present disclosure;

FIG. 4 illustrates a flowchart of a measurement method in a wireless communication system according to an embodiment of the present disclosure;

FIG. 5 illustrates a flowchart of a measurement method in a wireless communication system according to an embodiment of the present disclosure;

FIG. 6 illustrates a schematic flowchart of a power saving method in a sidelink system according to an embodiment of the present disclosure;

FIG. 7 illustrates a flowchart of another example power saving method according to an embodiment of the present disclosure;

FIG. 8 illustrates a flowchart of another example power saving method according to an embodiment of the present disclosure;

FIG. 9 illustrates a flowchart of another example power saving method according to an embodiment of the present disclosure; and

FIG. 10 illustrates a block diagram of a terminal according to an embodiment of the present disclosure.

[Mode for the Invention]

The following description with reference to the accompanying drawings is provided to assist in a comprehensive understanding of various embodiments of the present disclosure as defined by the claims and their equivalents. The following description includes various specific details to assist understanding, but these are merely example. Accordingly, those skilled in the art will recognize that various changes and modifications may be made to the various embodiments described herein without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Therefore, it will be apparent to those skilled in the art that the following descriptions of the various embodiments of the present disclosure are provided for illustrative purposes only and are not intended to limit the present disclosure as defined by the appended claims and their equivalents.

Unless otherwise defined, the technical or scientific terms used in the present disclosure shall have the ordinary meanings understood by those having ordinary skills in the field to which the invention belongs. The terms "first", "second", and the like used in this disclosure do not indicate any order, quantity, or importance, but are only used to distinguish different components. Similarly, "a", "an", or "the" and the like do not indicate a limit on quantity, but rather indicate that there is at least one. Words such as "including" or "comprising" mean that the element or item appearing before the word encompasses the element or item appearing after the word and the equivalent thereof without excluding other elements or items. Words such as "connected" or "interconnected" are not limited to physical or mechanical connections, but may include electrical connections, whether direct or indirect. "Upper", "lower", "left", "right", etc. are only used to indicate the relative positional relationship, and in a case where the absolute position of the object to be described is changed, the relative positional relationship may also be changed accordingly.

The advantages and features of one or more embodiments of the present disclosure and implementation methods thereof can be more easily understood by referring to the following detailed description of the embodiments and the accompanying drawings. In this regard, the embodiment may have different forms and should not be construed as being limited to the descriptions set forth herein. Rather, these embodiments are provided so that this disclosure will be thorough and complete, and will fully convey the concept of the embodiments to those skilled in the art, and the scope of protection of this disclosure will be limited only by the appended claims.

Here, it will be understood that a flowchart or a combination of blocks in a process flowchart may be executed by computer program instructions. These computer program instructions can be loaded into a processor of a general purpose computer, special purpose computer, or another programmable data processing device, so the instructions executed by a computer or a processor of another programmable data processing device are created for execution unit of functions described in flowchart block(s). Computer program instructions may be stored in a computer-usable or computer-readable memory capable of directing a computer or another programmable data processing device to perform a function in a particular way, and therefore, instructions stored in the computer-usable or computer-readable memory can also produce manufacturing items that contain instruction units for performing the functions described in the flowchart block. Computer program instructions may also be loaded into a computer or another programmable data processing device, and therefore, in a case where a series of operations are performed in the computer or the other programmable data processing device, instructions of the computer or the other programmable data processing device operated by generating a process performed by the computer can provide operations for performing the functions described in the flowchart block.

In addition, each block may represent module, segment, or portion of code, where the module, segment, or code includes one or more executable instructions for performing specified logical function(s). It should also be noted that in some alternative implementations, the functions mentioned in the block may not appear in order. For example, two blocks shown in sequence may in fact be executed concurrently, or the blocks may sometimes be executed in a reverse order according to corresponding functions.

The term "unit" in an embodiment of the present disclosure means a software component or a hardware component (such as a field programmable gate array (FPGA) or an application specific integrated circuit (ASIC)) that performs a specific function. However, the term "unit" is not limited to software or hardware. A "unit" may be formed to be in an addressable storage medium or may be formed to operate one or more processors. Thus, for example, the term "unit" may refer to components such as software components, object-oriented software components, class components, and task components, and may include procedures, functions, properties, programs, subroutines, program code segments, drivers, firmware, microcode, circuits, data, databases, data structures, tables, arrays, or variables. The functions provided by components and "units" can be associated with fewer components and "units", or can be divided into additional components and "units". In addition, components and "units" may be embodied as reproducing one or more Central Processing Units (CPUs) in a device or a secure multimedia card. Furthermore, in embodiments, a "unit" may include at least one processor.

In the description of the present disclosure, when it is considered that some detailed explanations about functions or configurations may unnecessarily obscure the essence of the present disclosure, these detailed explanations will be omitted. All terms (including descriptive or technical terms) used herein should be interpreted as having apparent meanings to those of ordinary skill in the art. However, these terms may have different meanings according to the intention of those of ordinary skill in the art, precedents or the emergence of new technologies, and therefore, the terms used herein must be defined based on the meanings of these terms together with the description throughout the specification. Hereinafter, for example, the base station may be at least one of a gNode B, an eNode B, a Node B, a radio access unit, a base station controller, and a node on a network. The terminal may include a user equipment (UE), a mobile station (MS), a mobile phone, a smart phone, a computer or multimedia system capable of performing communication functions. In some implementations of the present disclosure, the downlink (DL) is a wireless transmission path through which signals are transmitted from a base station to a terminal, and the uplink (UL) is a wireless transmission path through which signals are transmitted from a terminal to a base station. In addition, one or more embodiments of the present disclosure may be applied to 5G wireless communication technologies (5G, new radio (NR)) developed after LTE-A, or to new wireless communication technologies proposed on the basis of 4G or 5G (for example, B5G (Beyond 5G) or 6G).

At present, sidelink communication in NR systems only supports direct communication between UEs. Because transmission power of a UE is limited, its coverage may be small correspondingly; combining with a regulation of keeping a large distance between vehicles at high vehicle speed, in some specific scenarios, a UE with a communication requirement in traffic may not be in a direct communication range of the other party. Therefore, it is necessary to consider a sidelink communication technology based on relay.

When relay-based sidelink communication is supported within the system, a node that needs to be relayed, also called a remote node, needs to determine how to select a suitable relay node.

In a D2D technology of Release 13, the UE selects a relay node with optimal signal strength based on measurement. The measurement of the relay node is performed based on RSRP measurement of its discovery signal. However, in NR systems, no discovery signal/channel is defined, so it is necessary to determine how to measure the relay node.

The text and drawings are provided as examples only to help readers understand the present disclosure. They are not intended and should not be interpreted as limiting the scope of the present disclosure in any way. Although certain embodiments and examples have been provided, based on the content disclosed herein, it is obvious to those skilled in the art that modifications to the illustrated embodiments and examples can be made without departing from the scope of the present disclosure.

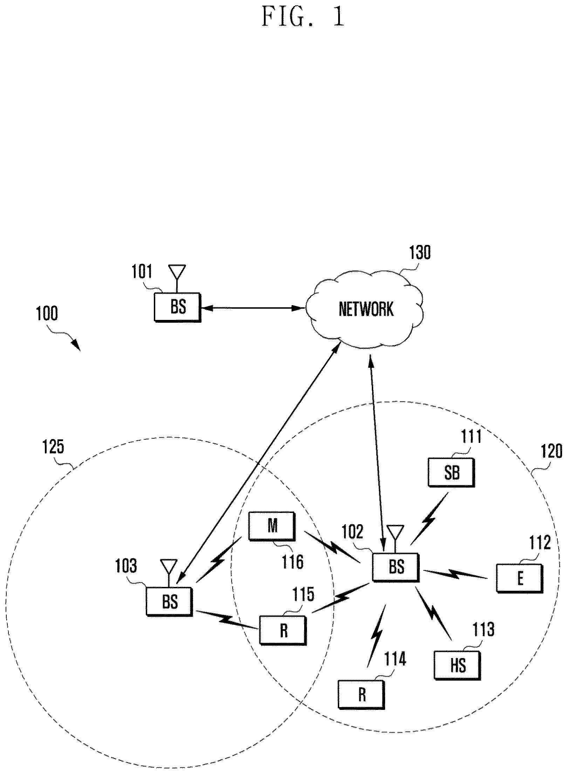

FIG. 1 illustrates an example wireless network 100 according to various embodiments of the present disclosure. The embodiment of the wireless network 100 shown in FIG. 1 is for illustration only. Other embodiments of the wireless network 100 can be used without departing from the scope of the present disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For convenience, the terms "user equipment" and "UE" are used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some examples, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a 2D antenna array as described in embodiments of the present disclosure. In some examples, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

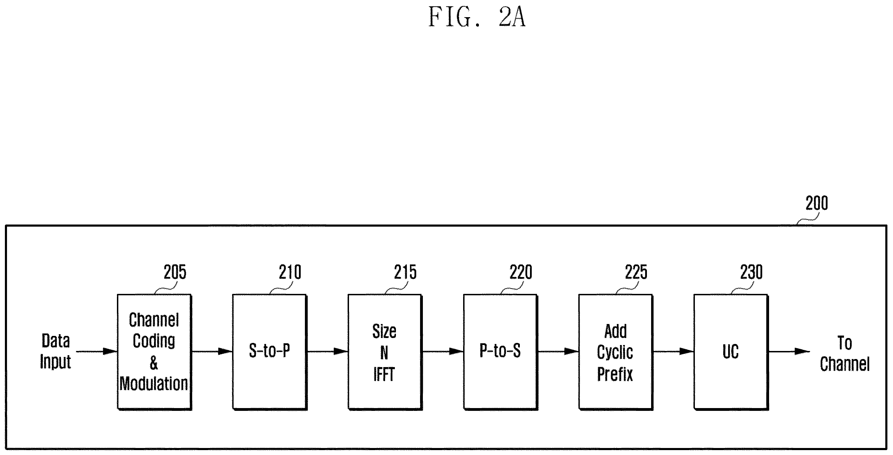

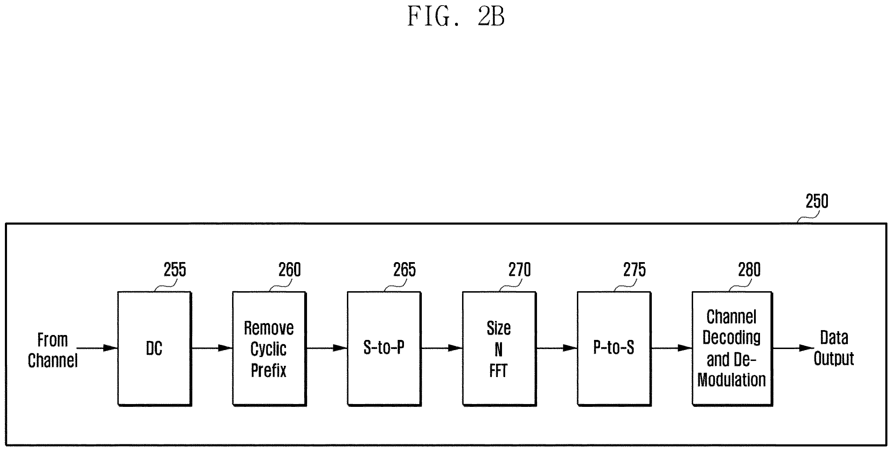

FIGs. 2A and 2B illustrate example wireless transmission and reception paths according to the present disclosure. In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some examples, the reception path 250 is configured to support codebook designs and structures for systems with 2D antenna arrays as described in embodiments of the present disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at UE 116 after passing through the wireless channel, and operations in reverse to those at gNB 102 are performed at UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2A and 2B can be implemented using only hardware, or using a combination of hardware and software/firmware. As a specific example, at least some of the components in FIGs. 2A and 2B may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the present disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2A and 2B illustrate examples of wireless transmission and reception paths, various changes may be made to FIGs. 2A and 2B. For example, various components in FIGs. 2A and 2B can be combined, further subdivided or omitted, and additional components can be added according to specific requirements. Furthermore, FIGs. 2A and 2B are intended to illustrate examples of types of transmission and reception paths that can be used in a wireless network. Any other suitable architecture can be used to support wireless communication in a wireless network.

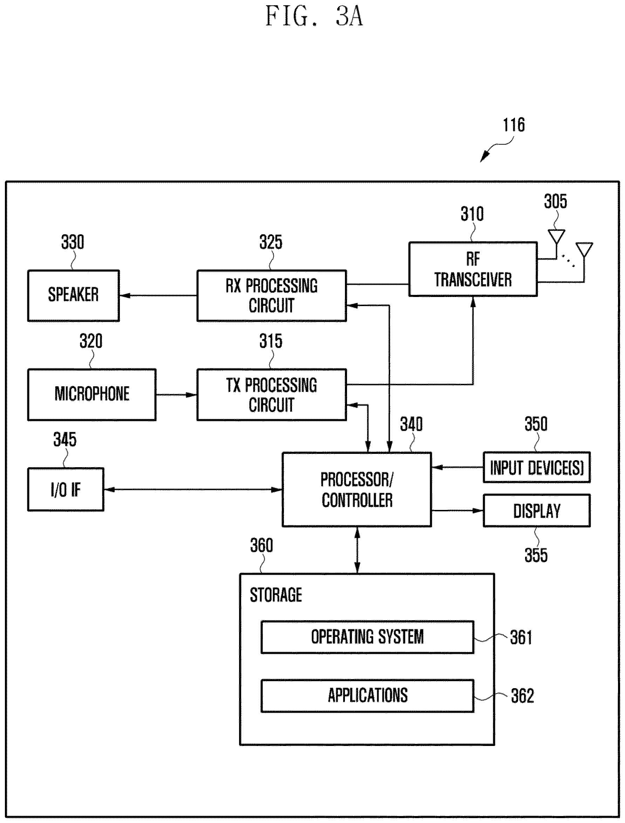

FIG. 3A illustrates an example UE 116 according to the present disclosure. The embodiment of UE 116 shown in FIG. 3A is for illustration only, and UEs 111-115 of FIG. 1 can have the same or similar configuration. However, a UE has various configurations, and FIG. 3A does not limit the scope of the present disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some examples, the processor/controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the present disclosure. The processor/controller 340 can move data into or out of the memory 360 as required by an execution process. In some examples, the processor/controller 340 is configured to execute the application 362 based on the OS 361 or in response to signals received from the gNB or the operator. The processor/controller 340 is also coupled to an I/O interface 345, where the I/O interface 345 provides UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3A illustrates an example of UE 116, various changes can be made to FIG. 3A. For example, various components in FIG. 3A can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3A illustrates that the UE 116 is configured as a mobile phone or a smart phone, UEs can be configured to operate as other types of mobile or fixed devices.

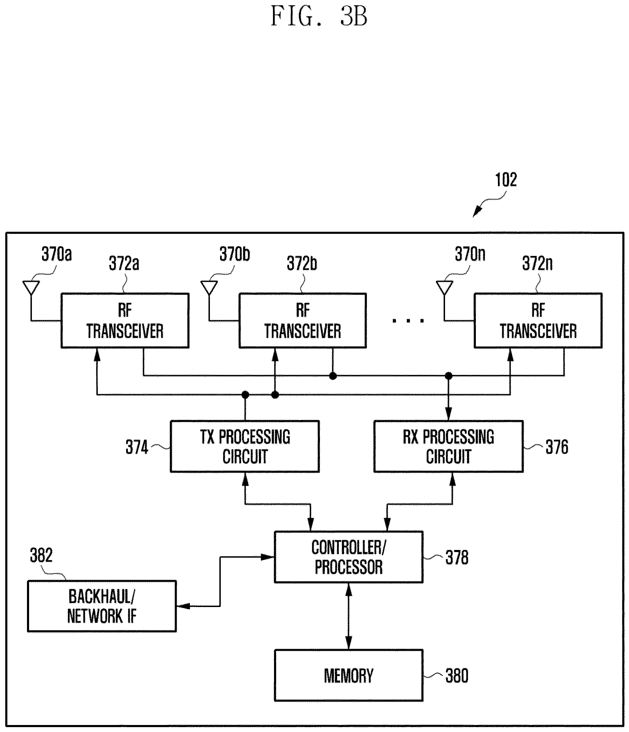

FIG. 3B illustrates an example gNB 102 according to the present disclosure. The embodiment of gNB 102 shown in FIG. 3B is for illustration only, and other gNBs of FIG. 1 can have the same or similar configuration. However, a gNB has various configurations, and FIG. 3B does not limit the scope of the present disclosure to any specific implementation of a gNB. It should be noted that gNB 101 and gNB 103 can include the same or similar structures as gNB 102.

As shown in FIG. 3B, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. gNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n down-convert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and up-convert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some examples, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the present disclosure. In some examples, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although FIG. 3B illustrates an example of gNB 102, various changes may be made to FIG. 3B. For example, gNB 102 can include any number of each component shown in FIG. 3A. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

In the Long Term Evolution (LTE) technology, sidelink communication includes two main types of mechanisms including direct Device to Device (D2D) communication and Vehicle to Outside communication (Vehicle to Vehicle/Infrastructure/Pedestrian/Network, collectively referred to as V2X), where the V2X communication is designed based on the D2D technology, is superior to the D2D in data rate, delay, reliability and link capacity, and is the most representative sidelink communication technology in LTE technology. In 5G systems, sidelink communication mainly includes V2X communication currently.

There are several sidelink physical channels defined in NR V2X systems, including a Physical Sidelink Control Channel (PSCCH), a Physical Sidelink Shared Channel (PSSCH) and a Physical Sidelink Feedback Channel (PSFCH). The PSSCH is used to carry data, the PSCCH is used to carry Sidelink Control Information (SCI), in which information such as a time-frequency domain resource location, a modulation and coding mode of associated PSSCH transmission, an identifier ID of a receiving target at which an associated PSSCH is directed is indicated, and the PSFCH is used to carry HARQ-ACK information corresponding to the data.

Current NR V2X systems take a slot in 5G systems as a minimum unit of time-domain resource allocation, and define a Subchannel as a minimum unit of frequency-domain resource allocation, wherein one subchannel is configured as several Resource Blocks (RBs) in frequency domain, and one subchannel may include resources corresponding to at least one of the PSCCH, PSSCH and PSFCH.

From the perspective of resource allocation, 5G sidelink communication systems include two modes: one is a resource allocation mode based on base station scheduling; the other is a resource allocation mode in which a User Equipment (UE) selects independently. In 5G V2X systems, the resource allocation mode based on base station scheduling is referred to as Mode 1; and the resource allocation mode in which a UE selects independently is referred to as Mode 2.

For Mode 1, the resource allocation mode based on base station scheduling means that a base station transmits a sidelink grant to a UE for sidelink transmission (hereinafter referred to as "sidelink UE"), and indicates several sidelink resources for the sidelink UE to use in the sidelink grant, and/or indicates periodic sidelink resources for the sidelink UE to use in the sidelink grant. The sidelink grant includes a dynamic grant and a configured grant, wherein the dynamic grant is indicated by Downlink Control Information (DCI); the configured grant further includes a type 1 configured grant indicated by Radio Resource Control (RRC) signaling and a type 2 configured grant indicated by RRC signaling and indicated to be activated/deactivated by DCI.

For Mode 2, a method for the sidelink UE to independently select resources means that the UE determines a specific time window before performing sidelink transmission according to a time range within which the sidelink transmission is expected to be transmitted, and the UE performs channel sensing in the specific time window, then excludes sidelink resources that have been reserved by other sidelink UEs according to a result of the channel sensing, and randomly selects in sidelink resources that have not been excluded.

A slot in embodiments of the present application may be either a subframe or slot in a physical sense, or a subframe or slot in a logical sense. Specifically, a subframe or slot in a logical sense is a subframe or slot corresponding to a resource pool of a sidelink communication. For example, in the V2X system, the resource pool is defined by a repeated bitmap mapped to a specific slot set, which may be all slots or all other slots except some specific slots (such as slots for transmitting the MIB/SIB). A slot indicated as "1" in the bitmap may be used for V2X transmission and belongs to slots corresponding to the V2X resource pool. A slot indicated as "0" cannot be used for V2X transmission and does not belong to slots corresponding to the V2X resource pool.

The difference between subframes or slots in a physical sense and that in a logical sense is explained by a typical application scenario: when calculating the time domain gap between two specific channels/messages (e.g., a PSSCH carrying sidelink data and a PSFCH carrying corresponding feedback information), and it is assumed that the gap is N slots, if calculating subframes or slots in a physical sense, the N slots correspond to the absolute time length of N*x milliseconds in the time domain, and x is the time length of a physical slot (subframe) under the numerology of the scenario, in milliseconds; otherwise, if calculating sub-frames or slots in a logical sense, taking a sidelink resource pool defined by a bitmap as an example, the intervals among the N slots correspond to N slots indicated as "1" in the bitmap, and the absolute time length of the interval varies with the specific configuration of the sidelink communication resource pool, rather than a fixed value.

In embodiments of the present application, a slot may be a complete slot or several OFDM symbols corresponding to a sidelink communication in a slot. For example, when the sidelink communication is configured to be performed on the X1-X2-th OFDM symbols in each slot, in this scenario, a slot in the following embodiments refers to the X1- X2-th OFDM symbols in a slot; for another example, when the sidelink communication is configured to be transmitted in a mini-slot, in this scenario, a slot in the following embodiments refers to the mini-slot defined or configured in the sidelink system, rather than the slot in the NR system; for still another example, when the sidelink communication is configured as symbol-level transmission, in this scenario, a slot in the embodiments may be replaced with OFDM symbols, or may be replaced with N OFDM symbols which are the time domain granularity of the symbol-level transmission.

In embodiments of the present application, information configured by the base station, information indicated by signaling, information configured by a higher layer, and preconfigured information may be a set of configuration information or multiple sets of configuration information. When information contains multiple sets of configuration information, the UE selects a set of configuration information from the multiple sets of configuration information for use according to a predefined condition. When information is a set of configuration information, the set of configuration information may contain multiple subsets, and the UE selects a subset from the multiple subsets for use according to a predefined condition.

In embodiments of the present application, some of the technical solutions provided are specifically described based on the V2X system, but their application scenarios should not be limited to the V2X system in sidelink communication, but may also be applied to other sidelink transmission systems. For example, the design based on V2X subchannels in the following embodiments may also be used for D2D subchannels or other subchannels for sidelink transmission. The V2X resource pool in the following embodiments may also be replaced by the D2D resource pool in other sidelink transmission systems such as the D2D.

In embodiments of the present application, "below a threshold value" may also be replaced by at least one of "above a threshold value", "below or equal to a threshold value", and "above or equal to a threshold value"; similarly, "higher than a threshold value" may be replaced by at least one of "lower than a threshold value", "lower than or equal to a threshold value", and "higher than or equal to a threshold value". Among them, the related expressions may be replaced by other expressions with the same or similar meanings, for example, "higher than" may also be expressed as "exceeding".

In embodiments of the present application, a UE used for transmitting a physical sidelink data channel is referred to as a transmitter UE and is denoted as a TX UE; and a UE used for receiving physical sidelink data channel is referred to as a receiver UE and is denoted as an RX UE.

In embodiments of the present application, when a sidelink communication system is the V2X system, a terminal or UE may be various types of terminals or UEs such as a vehicle, an infrastructure, a pedestrian, etc.

Discontinuous transmission (DTX) in the specification may also be replaced by discontinuous reception (DRX), and the protection scope should not be affected by different names.

A base station in the specification may also be replaced by other nodes, such as a sidelink node, and a specific example is an infrastructure UE in the sidelink system.

In the specification, physical subframes and/or logical subframes may be included in active periods/inactive periods of DTX configurations and measurement windows for measurement, wherein the logical subframes include subframes configured for a sidelink resource pool.

Generally, a sidelink UE needs to keep monitoring on a configured whole resource pool, which will cause large power consumption. In addition, channel sensing is usually based on a premise that the UE monitors and caches the resource pool, so channel sensing has certain requirements for UE's monitoring behavior and caching ability. UEs that are sensitive to power consumption and may have weak caching ability will be introduced in the future versions, which may not be suitable to adopt the current mechanism.

Compared with a mechanism that a UE always keeps monitoring on a resource pool in Rel-16, in order to make the sidelink system more widely applicable to various kind of devices, especially devices that rely on batteries and are relatively sensitive to power consumption, such as handheld terminals, it is necessary to introduce a mechanism that is suitable for the sidelink system and may make the UE turn off a transmission/reception function regularly so that power consumption is reduced.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

In order to make the purpose, technical schemes and advantages of the present application more clear, the embodiments of the present application will be further described in detail with reference to the accompanying drawings.

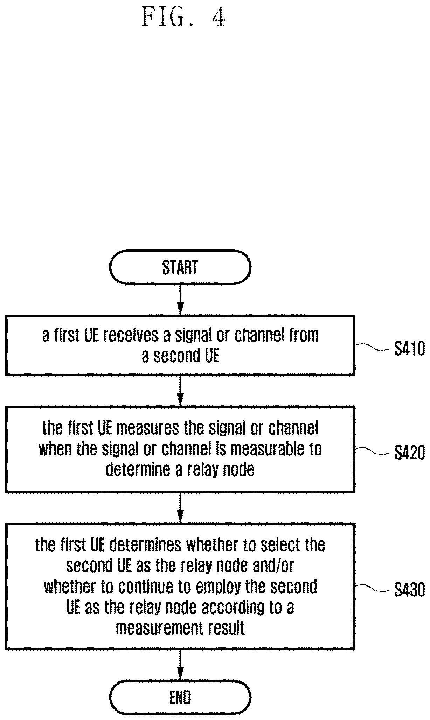

FIG. 4 illustrates a flowchart of a measurement method in a wireless communication system according to an embodiment of the present disclosure.

In the embodiment, as shown in FIG. 4, in S410, a first UE receives a signal/channel from a second UE.

In some implementations, the signal/channel includes at least one of the following (signals/channels): a reference signal of a PSCCH, a reference signal of a PSSCH, an S-SSB, a PSBCH block, a reference signal of the PSBCH block, the PSCCH, the PSSCH and a PSFCH. In some implementations, the reference signal of the PSBCH block and/or the PSCCH and/or the PSSCH include at least one of: a DMRS, a CSI-RS, and a PT-RS.

In S420, the first UE measures the signal/channel when the signal/channel is measurable to determine a relay node. In some implementations, which signal/channel to measure may be preconfigured, or configured by a base station, or configured by a higher layer, or predefined.

In S430, the first UE determines whether to select the second UE as the relay node and/or whether to continue to use the second UE as the relay node according to a measurement result.

The first UE may select the relay node according to the measurement result of the signal/channel, thereby improving the reliability of relay-based sidelink communication.

In some implementations, the method further includes that: the first UE determines whether the signal/channel is measurable to determine the relay node. The first UE determining whether the signal/channel is measurable to determine the relay node includes using at least one of the following methods to determine whether the signal/channel is measurable to determine the relay node:

determining based on a resource pool; for example, the first UE acquires a configuration of a resource pool configured by the base station/configured by the higher layer/preconfigured/predefined, wherein the resource pool is configured for measurement of the relay node; the first UE considers that signals/channels from the second UE received in the resource pool are measurable to determine the relay node. Optionally, the resource pool is (pre)configured/(pre)defined independently from other resource pools that are not used for the measurement of the relay node, time-frequency resources of which may (partially) overlap or not overlap;

determining based on an identity of the second UE; for example, the first UE acquires identities of relay nodes configured by the base station/configured by the higher layer/preconfigured/predefined, which may be a set of multiple specific identities; if the first UE receives the signal/channel from the second UE and determines that the identity of the second UE belongs to the identities of the relay nodes, it considers that the signal/channel from the second UE is measurable to determine the relay node.

determining based on a resource in which the signal/channel is received; for example, the first UE acquires a set of time-frequency resources from the base station or the higher layer, wherein the set is used to transmit signals/channels corresponding to the measurement of the relay node; the first UE considers that signals/channels from the second UE received on the set of time-frequency resources are measurable to determine the relay node. Optionally, the set of time-frequency resources is derived and determined based on the identity of the second UE, for example, the identity of the second UE is k, and the set of time-frequency resources includes any subframe n, if the subframe n is in a sidelink resource pool and satisfies that n mod period1 = k mod period2; wherein period1 and period2 are real numbers configured by the base station;

determining based on an indication carried in or corresponding to the signal/channel;

determining based on a type of the signal/channel; determining based on a selected relay node; for example, if the first UE has selected the second UE as the relay node, any signal/channel from the second UE or a specific type of signal/channel from the second UE is measurable to determine the relay node.

In some implementations, the indication carried in or corresponding to the signal/channel includes at least one of:

an indication in RRC signaling;
an indication in MAC signaling, which may be at least one of a MAC CE, a field in a MAC header, a field in a MAC sub-header, and a logical channel identity (LCID);
an indication based on an SCI format, for example, the first UE determines that signals/channels using a specific 1st order and/or 2nd order SCI format are measurable to determine the relay node;
an indication field in SCI; optionally, a reserved field in an existing 1st order and/or 2nd order SCI format is used, for example, 1 bit in the reserved field is used for indicating; optionally, a field in a new 1st order and/or 2nd order SCI format is used for indicating;
a sequence for scrambling, for example, the first UE acquires a (pre)configured/(pre)defined scrambling RNTI, and determines that a signal/channel scrambled by the RNTI is measurable to determine the relay node.

The first UE uses at least one of the above methods to determine whether the signal/channel is measurable to determine the relay node, which improves the flexibility and accuracy of the determination. The technical methods also expand the kind of signals/channels used by a sidelink UE to measure channel quality in current technical methods, so that measurement of sidelink links by the UE is more comprehensive and accurate. In addition, the technical methods also enable the UE to selectively measure partial transmission but not all of one or more kinds of signals/channels, which not only reduces the overhead of performing sidelink measurement by the UE, but also avoids the UE measuring some signals/channels that do not feed back a sidelink link state accurately enough, thereby contributing to improving the accuracy of the sidelink measurement. Therefore, the UE may better determine the relay node by the sidelink measurement, thereby improving the communication performance of relay links.

In some implementations, the method further includes that: the first UE triggers the second UE to transmit the signal/channel for measurement of the relay node; and the first UE determines that the signal/channel is measurable to determine the relay node after receiving the signal/channel that the second node is triggered to transmit.

The technical methods may enable the second UE to transmit the signal/channel for the measurement of the relay node as required, so as to reduce the overhead of the signal/channel and reduce a congestion degree of the system.

Optionally, in some implementations, when a predetermined condition is satisfied, the first UE performs at least one behavior of the following behaviors:

measuring the reference signal (in the signal/channel) and/or the SSB and/or the PSFCH and generating a measurement result based on RSRP and/or RSRQ;
measuring any one or any combination (e.g., any more) of the above (in the signal/channel), and generating a measurement result based on RSSI.
satisfying the predetermined condition includes at least one of: satisfying a configuration of the base station/higher layer, for example, the first UE is configured by the base station/a higher layer of the first UE to perform the above at least one behavior; satisfying a preconfiguration/predefinition, for example, the first UE is preconfigured/predefined to perform the above at least one behavior; the method of determining that the signal/channel is measurable to determine the relay node corresponding to the above at least one behavior.

For example, the first UE measures the PSSCH and/or the PSCCH of the signal/channel and generates the measurement result based on the RSSI, when the first UE determines that the signal/channel is measurable to determine the relay node based on the identity of the second UE and resources for receiving the signal/channel, and/or when the first UE derives and determines the set of time-frequency resources based on the identity of the second UE and determines that the signal/channel received on the set of time-frequency resources is measurable to determine the relay node.

The first UE may select a more suitable measurement means according to the configuration and the manner of determining that the signal/channel is measurable to determine the relay node, thereby improving the accuracy of the sidelink measurement.

In some implementations, the first UE determining whether to select the second UE as the relay node and/or whether to continue to use the second UE as the relay node according to the measurement result includes at least one of:

> selecting the second UE as the relay node when the measurement result belongs to a first threshold interval, otherwise, not selecting the second UE as the relay node;
> not continuing to use the second UE as the relay node when the measurement result does not belong to a second threshold interval.

The first threshold interval and the second threshold interval are configured by the base station/higher layer, or (pre)defined/(pre)configured, and may be the same or different. For example, when UE selects the relay node initially, the measurement result needs to be higher than a higher threshold value, and a measurement result that triggers reselection needs to be lower than a lower threshold value. The method may enable the UE to select a node with better performance in initial selection, and avoid frequently reselecting the relay node due to performance fluctuation with the relay node, thus frequently disconnecting or switching communication links.

In some implementations, the first UE determining whether to continue to use the second UE as the relay node according to the measurement result includes reselecting the relay node if it is determined not to continue to use the second UE as the relay node. Optionally, the relay node is reselected by the method of initial selection of the relay node, and in the process of reselecting the relay node, parameter values which are the same as or different from those in the method of initial selection of the relay node may be adopted. For example, in the process of reselecting the relay node, an RSRP threshold value, an RSSI threshold value, or a CSI-RS/CQI threshold value which is the same as or different from that in the method of initial selection of the relay node may be adopted. For different cases, the threshold values (or other parameters) in the reselection process and the threshold values in the initial selection may be respectively (pre)configured or respectively (pre)defined by the higher layer/base station using different fields; they may also be configured together and acquired by a predetermined offset, For example, the UE may acquire the threshold values of initial selection configured by the base station, and acquire a threshold value offset in the initial selection process and reselection process configured by the base station or predefined, and derive the threshold values in the reselection process according to the threshold values of initial selection and the offset. On the basis of simplifying the configuration of relay measurement characteristics, the method may allow the UE to acquire a more flexible configuration, so that in the initial selection and reselection process, more suitable parameters are adopted according to the requirement of selecting the initial node as soon as possible and avoiding frequently reselecting the relay node.

In some implementations, the first UE determining whether to select the second UE as the relay node and/or whether to continue to use the second UE as the relay node further includes: determining whether to select the second UE as the relay node and/or whether to continue to use the second UE as the relay node based on feedback information of transmission with the second UE. In some implementations, the feedback information includes at least one of: HARQ-ACK feedback, and CSI feedback. Optionally, in an embodiment, the first UE may determine whether to select the second UE as the relay node and/or whether to continue to use the second UE as the relay node according to measurement information or based on the feedback information of transmission with the second UE.

In an exemplary embodiment, the first UE does not continue to use the second UE as the relay node after communication between the first UE and the second UE fails N times continuously or fails N times in total for a period of time. N and/or a length/position of the period of time may be configured by the base station/higher layer, or (pre)defined/(pre)configured.

In the method, the feedback information may be regarded as another form of index reflecting a link state, which enables the UE to further utilize the feedback information acquired in a process of performing communication normally, and effectively estimate the link quality by the information without additional overhead for measurement.

Optionally, in some implementations, the method further includes that: the first UE transmits a determination result to a third node after determining whether to select the second UE as the relay node and/or whether to continue to use the second UE as the relay node. The third node includes at least one of: the first UE itself; the second UE; other UEs supporting sidelink; and a base station.

In some implementations, a manner of transmitting the determination result to the third node includes at least one of:

transmitting a control channel and/or SCI, and indicating the determination result in the control channel and/or SCI;
transmitting higher layer signaling (e.g., MAC signaling/RRC signaling), and indicating the determination result in the higher layer signaling;
transmitting a PSFCH, and indicating the determination result in the PSFCH.

A manner of indicating the determination result includes at least one of:

indicating an identity of the relay node;
indicating that the second UE is requested as the relay node of the first UE; for example, 1 bit is used, wherein '1' corresponds to requesting the second UE receiving the indication as the relay node of the first UE, and '0' denotes that the second UE receiving the indication is not requested as the relay node of the first UE.

The first UE transmits the determination result to the third node, which may enable the third node to perform subsequent operations according to the determination result of the first UE, for example, when the third node is the first UE, the first UE may begin to establish a connection with the relay node, and when the third node is the second UE, the second UE may prepare to establish a relay link with the first UE, and when the third node is the base station or other sidelink UEs, the base station or other sidelink UEs may provide configuration information for the relay link. The technical method may also enable the first UE to transmit the determination result to the third node easier, and reduce the overhead in this process.

In an exemplary embodiment, the second UE periodically broadcasts (or groupcasts/unicasts) a specific signal/channel, which is used by the surrounding potential first UE as a remote node for measurement to determine the relay node. The first UE acquires identities of UEs which may act as the relay node from the base station, and determines that the second UE may be used as the relay node based on the identity of the second UE, determines time-frequency resources for periodically broadcasting the specific signal/channel according to the identity of the second UE, and receives the specific signal/channel on the resources. In the exemplary embodiment, the specific signal/channel includes the PSSCH. The first UE measures the reference signal of the PSSCH, and if the measured RSRP exceeds a threshold value configured by the base station, the first UE determines to select the second UE as the relay node. Thereafter, the first UE transmits the PSFCH to the second UE, wherein content of the PSFCH is ACK, which is used to indicate the determination result of the first UE. When the specific signal/channel is transmitted by the second UE by broadcast, the first UE reuses a method for determining PSFCH resources for unicast or groupcast (option 1 and/or option 2) in Release 16, and determines resources for transmitting the PSFCH.

In another exemplary embodiment, the first UE transmits trigger signaling to the second UE by unicast/multicast/broadcast after determining that the relay node is needed, and the second UE transmits a specific signal/channel after receiving the trigger signaling, which is used by the surrounding potential first UE as a remote node for measurement to determine the relay node. The first UE measures the specific signal/channel, and determines to select the second UE as the relay node. Thereafter, the first UE transmits the PSCCH and/or the PSSCH to the second UE, and indicates the determination result in the PSCCH, for example, 1 bit is used to indicate that the second UE is requested as the relay node of the first UE in the 1st order SCI carried on the PSCCH; 1 bit is used to indicate that the second UE is requested as the relay node of the first UE in the 2nd order SCI; or higher layer signaling is used to indicate that the second UE is requested as the relay node of the first UE in the PSSCH.

The measurement method according to the embodiments may enable the remote node to select the relay node with better communication link quality, and select a node with the best performance among a plurality of available relay nodes, thereby improving the reliability of relay-based sidelink communication.

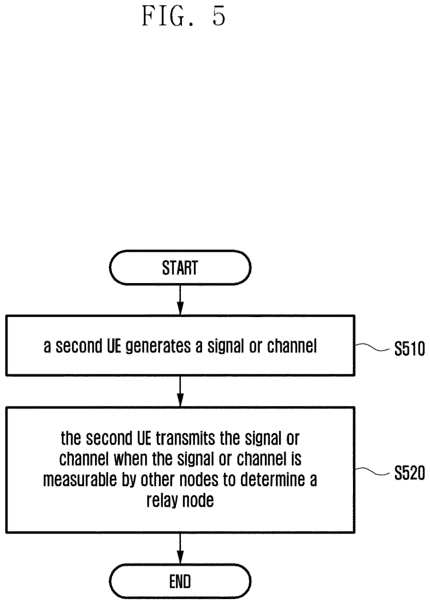

FIG. 5 illustrates a flowchart of a measurement method in a wireless communication system according to an embodiment of the present disclosure.

In the embodiment, as shown in FIG. 5, in S510, a second UE generates a signal/channel. The signal/channel is similar to the signal/channel of the previous embodiments and will not be described in detail here.

In S520, the second UE transmits the signal/channel when the signal/channel is measurable by other nodes to determine a relay node.

The second UE may transmit the signal/channel that is measurable by other nodes to determine the relay node, so that other nodes may select the relay node based on a measurement result, thus improving the reliability of relay-based sidelink communication.

In some implementations, the method further includes that: the second UE determines whether the signal/channel is measurable by other nodes to determine the relay node. In some implementations, the second UE determining whether the signal/channel is measurable by other nodes to determine the relay node includes using at least one of the following methods to determine whether the signal/channel is measurable by other nodes to determine the relay node:

determining based on a resource pool; for example, the second UE acquires a configuration of a resource pool configured by a base station/configured by a higher layer/preconfigured/predefined, wherein the resource pool is configured for measurement of the relay node; the second UE considers that signals/channels transmitted in the resource pool are measurable to determine the relay node. Optionally, the resource pool is (pre)configured/(pre)defined independently from other resource pools that are not used for the measurement of the relay node, time-frequency resources of which may (partially) overlap or not overlap;

determining based on an identity of a first UE; for example, the second UE acquires identities of remote nodes configured by a base station/configured by a higher layer/preconfigured/predefined, which may be a set of multiple specific identities; if the second UE determines that the identity of the first UE belongs to the identities of the relay nodes when transmitting the signal/channel to the first UE, it considers that the signal/channel transmitted to the first UE is measurable to determine the relay node.

determining based on a resource for transmitting the signal/channel; for example, the second UE acquires a set of time-frequency resources from the base station or the higher layer, wherein the set is used to transmit signals/channels corresponding to the measurement of the relay node; the second UE considers that signals/channels transmitted on the set of time-frequency resources are measurable to determine the relay node. Optionally, the set of time-frequency resources is derived and determined based on the identity of the first UE, for example, the identity of the first UE is k, and the set of time-frequency resources includes any subframe n, if the subframe n is in a sidelink resource pool and satisfies that n mod period1 = k mod period2; wherein period1 and period2 are real numbers configured by the base station;

determining based on an indication carried in or corresponding to the signal/channel;

determining based on a type of the signal/channel; determining based on a selected remote node, wherein the selected remote node includes other nodes that select the second UE as the relay node; for example, if the first UE has selected the second UE as the relay node, that is, the second UE has selected the first UE as the remote node, any signal/channel transmitted to the first UE or a specific type of signal/channel transmitted to the first UE is measurable to determine the relay node.

In some implementations, the indication carried in or corresponding to the signal/channel includes at least one of:

an indication in RRC signaling;
an indication in MAC signaling, which may be at least one of a MAC CE, a field in a MAC header, a field in a MAC sub-header, and a logical channel identity (LCID);
an indication based on an SCI format, for example, the second UE determines that signals/channels using a specific 1st order and/or 2nd order SCI format are measurable to determine the relay node;
an indication field in SCI; optionally, a reserved field in an existing 1st order and/or 2nd order SCI format is used, for example, 1 bit in the reserved field is used for indicating; optionally, a field in a new 1st order and/or 2nd order SCI format is used for indicating;
a sequence for scrambling, for example, the second UE acquires a (pre)configured/(pre)defined scrambling RNTI, and determines that a signal/channel scrambled by the RNTI is measurable to determine the relay node.

The second UE uses at least one of the above methods to determine whether the signal/channel is measurable to determine the relay node, which improves the flexibility and accuracy of the determination. The technical methods also expand the kind of signals/channels used by a sidelink UE to measure channel quality in current technical methods, so that measurement of sidelink links by the UE is more comprehensive and accurate. In addition, the technical methods also enable the UE to selectively measure partial transmission but not all of one or more kinds of signals/channels, which not only reduces the overhead of performing sidelink measurement by the UE, but also avoids the UE measuring some signals/channels that do not feed back a sidelink link state accurately enough, thereby contributing to improving the accuracy of the sidelink measurement. Therefore, the UE may better determine the relay node by the sidelink measurement, thereby improving the communication performance of relay links.

In some implementations, the method further includes that: the second UE receives trigger signaling from the first UE, which is used to trigger the second UE to transmit the signal/channel available for measurement of the relay node; and the second UE transmits the signal/channel to the first UE after receiving the trigger signaling, and determines that the signal/channel is measurable by other nodes to determine the relay node.

The technical methods may enable the second UE to transmit the signal/channel for the measurement of the relay node as required, so as to reduce the overhead of the signal/channel and reduce a congestion degree of the system.

In some implementations, the method further includes that: the second UE indicates that the signal/channel is measurable by other nodes to determine the relay node. In some implementations, the second UE indicating that the signal/channel is measurable by other nodes to determine the relay node includes indicating in the signal/channel.

In some implementations, the method further includes that: the second UE receives a determination result from the first UE after transmitting the signal/channel; and determines whether the first UE selects the second UE as the relay node and/or whether the first UE continues to use the second UE as the relay node according to the determination result.

In some implementations, a manner of receiving the determination result includes at least one of:

receiving a control channel and/or SCI from the first UE, and acquiring the determination result indicated in the control channel and/or SCI;
receiving higher layer signaling (e.g., MAC signaling/RRC signaling) from the first UE, and acquiring the determination result indicated in the higher layer signaling;
receiving a PSFCH from the first UE, and acquiring the determination result indicated in the PSFCH.

In some implementations, a manner of indicating the determination result includes at least one of:

indicating an identity of the relay node;
indicating that the second UE is requested as the relay node of the first UE; for example, 1 bit is used, wherein '1' corresponds to requesting the second UE receiving the indication as the relay node of the first UE, and '0' denotes that the second UE receiving the indication is not requested as the relay node of the first UE.

The first UE transmits the determination result to the third node, which may enable the third node to perform subsequent operations according to the determination result of the first UE, for example, when the third node is the first UE, the first UE may begin to establish a connection with the relay node, and when the third node is the second UE, the second UE may prepare to establish a relay link with the first UE, and when the third node is the base station or other sidelink UEs, the base station or other sidelink UEs may provide configuration information for the relay link. The technical method may also enable the first UE to transmit the determination result to the third node easier, and reduce the overhead in this process.

The embodiment in the present disclosure provides the method for selecting the relay node based on the measurement result in sidelink communication using a relay. Therefore, a sidelink terminal may select the relay node with better channel quality of relay links, which optimizes the performance of sidelink relay communication.

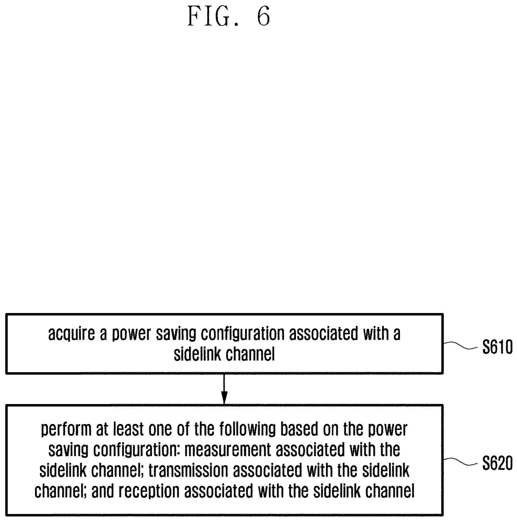

FIG. 6 illustrates a schematic flowchart of a power saving method in a sidelink system according to an embodiment of the present disclosure. As shown in FIG. 6, in step S610, a power saving configuration associated with a sidelink channel may be acquired. In step S620, at least one of the following may be performed based on the power saving configuration: measurement associated with the sidelink channel; transmission associated with the sidelink channel; and reception associated with the sidelink channel.

According to the embodiments of the present disclosure, the transmission associated with the sidelink channel may include transmission of a sidelink signal/channel and/or transmission of an uplink signal/channel for reporting sidelink transmission related information, which may include a PUCCH/PUSCH for indicating sidelink feedback information, and sidelink SR/BSR; furthermore, the reception associated with the sidelink channel may include reception of the sidelink signal/channel and/or reception of a downlink signal/channel for scheduling sidelink transmission, which includes a DCI format for scheduling sidelink resources and RRC signaling for indicating sidelink configurations. The measurement associated with the sidelink channel may include measurement of the sidelink signal/channel (e.g., sidelink channel busy ratio measurement or sidelink channel occupancy ratio measurement, etc.), and/or measurement of a signal/channel for reporting the sidelink transmission related information or scheduling the sidelink transmission. The method shown in FIG. 6 will be further described below in connection with embodiments.

In the sidelink system, if a UE is configured with a sidelink channel occupancy ratio (CR) limit parameter, e.g., sl-CR-Limit, the UE needs to ensure that a sum of CRs below any priority does not exceed a CR limit parameter corresponding to the priority before transmitting a PSSCH. The CR limit parameter is associated to the priority and a sidelink channel busy ratio (CBR), so UE needs to perform sidelink CBR measurement to select a suitable CR limit parameter. According to the method without the power saving configuration, if the UE will transmit the PSSCH in slot n, it needs to measure a SL CBR in CBR measurement window slots $[n-a, n-1]$, where $a=100$ or $100 \cdot 2^{\mu}$ slots, and $\mu$ is a congestion control processing time parameter.

In some examples, the performing of the measurement associated with the sidelink channel based on the power saving configuration may include: determining resources to be used for transmitting the sidelink channel; determining one or more resource ranges for the measurement associated with the sidelink channel based on the resources and the power saving configuration; and performing the measurement on resources within the one or more resource ranges. It should be understood that the one or more resource ranges may include one or more slot ranges, micro-slot ranges, mini-slot ranges or symbol ranges for measurement, etc., for example, one or more slot ranges for measuring the sidelink channel busy ratio or the sidelink channel occupancy ratio.

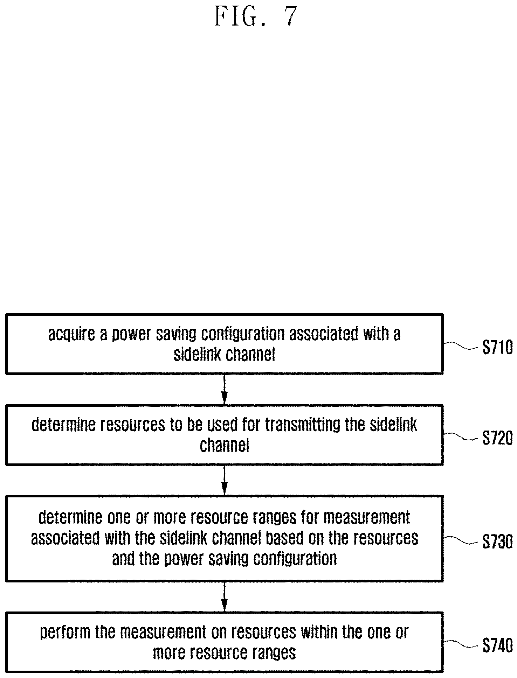

FIG. 7 illustrates a flowchart of another example power saving method according to an embodiment of the present disclosure. As shown in FIG. 7, in step S710, a power saving configuration associated with a sidelink channel may be acquired; in step S720, resources to be used for transmitting the sidelink channel may be determined; in step S730, one or more resource ranges for measurement associated with the sidelink channel may be determined based on the resources and the power saving configuration; and in step S740, the measurement may be performed on resources within the one or more resource ranges.

For example, in an embodiment, the UE in a sidelink communication system may perform CBR measurement according to the power saving configuration. Specifically, the UE in the sidelink communication system may determine resources to be used for transmitting a specific sidelink signal/channel, and determine a sidelink CBR measurement window according to the resources and the power saving configuration, and measure a sidelink CBR within the measurement window.

The power saving configuration may include at least one of: a DTX configuration; a UE go-to-sleep/wake-up related configuration, e.g., a DRX power saving signal, a wake-up-signal WUS, and a go-to-sleep signal GTS. The DRX power saving signal may be used to determine whether the UE enters an active state in a current or next DRX cycle, for example, whether to start an active state timer DRX-onDurationTimer of the current or next cycle.

In some examples, the determining of the one or more resource ranges for the measurement associated with the sidelink channel based on the resources and the power saving configuration may include: for at least one of the one or more resource ranges: determining at least two of a length of the resource range, a start position of the resource range and an end position of the resource range; and determining the resource range based on at least two of the length, start position and end position of the resource range, wherein the length of the resource range may be determined based on the power saving configuration, and the start position of the resource range and the end position of the resource range may be determined based on the resources or based on the resources and the power saving configuration.

In some examples, the determining of the length of the resource range may include: determining the length of the resource range as a first length in a case where power saving characteristic is not enabled; and determining the length of the resource range as a second length different from the first length in a case where the power saving characteristic is enabled, wherein the second length is determined based on the power saving configuration. For example, it is shown as Method 1 below.

In some examples, the determining of the length of the resource range may include: determining the length of the resource range as a first length when power saving characteristic is not enabled; and determining a scaling factor associated with the length of the resource range based on the power saving configuration and determining the length of the resource range as a third length in a case where the power saving characteristic is enabled, wherein the third length is determined based on the first length and the scaling factor. For example, it is shown as Method 2 below.

In some examples, the determining of the one or more resource ranges for the measurement associated with the sidelink channel based on the resources and the power saving configuration may include: for at least one of the one or more resource ranges, determining a length of the resource range based on the power saving configuration; determining at least one of a start position and an end position of the resource range based on the resources or based on the resources and the power saving configuration; determining a specific condition associated with resource ranges for the measurement associated with the sidelink channel; and determining the resource range based on one of the start position and the end position of the resource range, the length of the resource range and the specific condition, wherein each resource within the resource range satisfies the specific condition, and wherein the specific condition includes that corresponding resources can be included in the resource range based on the power saving configuration. For example, it is shown as Method 3 below.

More specifically, In some implementations, the UE may determine the SL CBR measurement window using at least one of the following methods:

Method 1: similarly, if the UE will transmit the PSSCH in slot n, the UE needs to measure the SL CBR in CBR measurement window slots [n-N, n-1] (or measure the SL CBR in slot n-N, which is similar in other methods herein and will not be illustrated repeatedly), where N=M or M·$2^\mu$ slots, and at least one of N, M, and $\mu$ may be preconfigured or configured by a base station or configured by a higher layer. Or, the UE may determine that a length of the CBR measurement window is N=M or M·$2^\mu$ slots, and determine a start position and/or an end position of the CBR measurement window; for example, the UE may determine the end position of the CBR measurement window as slot n-1, and determine the start position as slot n-N according to the end position and the window length. However, when the UE is configured to enable a power saving characteristic and is configured not to enable the power saving characteristic, different values of N, and/or different values of M, and/or different values of $\mu$ are used. For example, if the UE is not configured to enable the power saving characteristic, tables 8.1.6-1 and 8.1.6-2 in TS 38.214 are used to determine the values of N; if the UE is configured to enable the power saving characteristic, one or more new tables are used to determine the values of N. The values of N, and/or the values of M, and/or the values of $\mu$ used in a case where the UE is configured to enable the power saving characteristic may be independently configured; or they are determined based on the power saving configuration, for example, the UE acquires the values of N, and/or the values of M, and/or the values of $\mu$ included in the power saving configuration.

Method 2: similarly, if the UE will transmit the PSSCH in slot n, the UE needs to measure the SL CBR in CBR measurement window slots [n-N', n-1] (or measure the SL CBR in slot n-N', which is similar in other methods herein and will not be illustrated repeatedly), where N' = M' or M'·$2\mu'$ slots. Or, the UE may determine a length of the CBR measurement window as n' slots, and determine a start position and/or an end position of the CBR measurement window; for example, the UE may determine the end position of the CBR measurement window as slot n-1, and determine the start position as slot n-N' according to the end position and the window length.

A scaling factor $\alpha$ may be introduced, and only when the UE is configured to enable the power saving characteristic, the scaling factor is used to determine that N' = $\alpha$*N, and/or M' = $\alpha$*M, and/or $\mu$' = $\alpha$*$\mu$; otherwise, to determine that N' = N, and/or M' = M, and/or $\mu$' = $\mu$. At least one of N, M, and $\mu$ is preconfigured or configured by the base station or configured by the higher layer, and/or N=M or M·$2\mu$. $\alpha$ may be a parameter independently configured by the base station, and/or $\alpha$ may be determined based on the power saving configuration.

In a case where $\alpha$ is determined based on the power saving configuration, the UE may determine a value of $\alpha$ according to at least one of:

acquiring an indication regarding the scaling factor $\alpha$ (independently) configured by the base station and/or (independently) configured by the higher layer, which may be used for indicating the value of the scaling factor. Or, the value of $\alpha$ (independently) configured by the base station and/or (independently) configured by the higher layer is acquired;

a length of at least one timer in the DTX configuration and/or a length of a DTX cycle; for example, the UE determines that the value of $\alpha$ is a ratio of the DTX cycle (e.g., DTX-cycle) to a length of a timer (e.g., onDurationTimer) for indicating a number of slots continuously monitored from the start of each DRX

$$\alpha = \frac{DTX\text{-}cycle}{onDurationTimer}$$

cycle, that is, ; wherein, when the UE is configured with one DRX cycle, the cycle may be used; otherwise, when the UE is configured with multiple DRX cycles (e.g., a long cycle longDTX-cycle and a short cycle short-DTX-cycle, etc.), one of the multiple DRX cycles, e.g., the longest or shortest one, may be used according to a preconfigured criteria or a configuration of the base station/higher layer.

Additionally or alternatively, in some implementations, the UE may acquire a CBR window length/scaling factor corresponding to each priority from the base station, and when a sidelink signal/channel that needs to be transmitted corresponds to priority x, a CBR window length/scaling factor corresponding to priority x may be used.

Method 3: the UE may determine a length of the CBR measurement window as N' slots, and determine a start position and/or an end position of the CBR measurement window; for example, the end position of the CBR measurement window may be determined as slot n-1. The UE may determine that the CBR measurement window only includes slots that satisfy a specific condition, and slots that do not satisfy the condition are not included in the CBR measurement window. A specific position of each slot in the CBR measurement window and/or the start position of the CBR measurement window and/or end position of the CBR measurement window may be determined according to the start and/or end position of the CBR measurement window and the specific condition. The UE may use any method to determine the length of the CBR measurement window, including using the method for determining the length of the CBR measurement window in the above Method 1 and Method 2 or any other method for determining the length of the CBR measurement window to determine the length of the CBR measurement window.

The specific condition may include: a condition on which the UE may perform the CBR measurement according to the power saving configuration. For example, if the UE is (pre)configured to perform the CBR measurement both when the DRX timer is active and when it expires, the CBR measurement window includes any slot configured to the sidelink system (for example, configured to a sidelink resource pool); otherwise, if the UE is (pre)configured to perform the CBR measurement only when the DRX timer is active, the CBR measurement window includes slots when the DRX timer is active. The DRX timer may be any DRX timer or a specific DRX timer, e.g., a timer for indicating the number of slots continuously monitored from the start of each DRX cycle (e.g., onDurationTimer) and/or a timer for indicating a number of slots continuously in an active state after the UE successfully decodes a specific channel (e.g., Inactivity Timer).

In some implementations, the performing of the measurement on resources within the one or more resource ranges may include any of: performing the measurement on all resources within the one or more resource ranges; performing the measurement on resources within the one or more resource ranges where a user equipment is in an active state; and determining a timer indicating whether the measurement can be performed, and performing the measurement on resources within the one or more resource ranges where the timer is running.

Specifically, in some implementations, the UE determines that the SL CBR measurement window includes slots [a, b], and there are slots in which the UE is in the active state and/or an inactive state according to the power saving configuration within a range of slots [a, b]. If there are slots in which the UE is in the inactive state according to the power saving configuration within the range of slots [a, b], the UE may determine the SL CBR measurement window and/or perform the CBR measurement using any of:

the UE performing the CBR measurement even if it is in the inactive state, that is, whether the UE may perform the CBR measurement on a certain slot being not limited by the power saving configuration. For example, the UE may perform the CBR measurement on each of the slots [a, b];

the UE performing the CBR measurement only when it is in the active state. If the method is used in combination with the scaling factor in Method 2 or the specific condition in Method 3 above, a number of slots in which the UE actually performes the CBR measurement may be kept relatively fixed, thereby ensuring that the accuracy of the CBR measurement is not significantly affected;

introducing a new DTX timer dedicated to indicating whether the UE may perform the CBR measurement, wherein when the timer is active (or does not expire), the UE may perform the CBR measurement, otherwise it cannot perform the CBR measurement. The timer may be configured by the base station/configured by the higher layer/preconfigured, and may be included in the DTX configuration, for example, it may be configured by an independent RRC field DTX-CBRMeasurementTimer in RRC signaling transmitted by the base station; and/or the timer may be determined based on other timers and/or CBR measurement configurations, for example, it may be determined according to a start position and/or cycle of the timer for indicating the number of slots continuously monitored from the start of each DRX cycle. For example, a length of the timer is the length or a maximum length of the CBR measurement window, a cycle of the timer is the cycle of the timer for indicating the number of slots continuously monitored from the start of each DRX cycle, and an end position of the timer is a previous slot of the start position of the timer for indicating the number of slots continuously monitored from the start of each DRX cycle. In a specific example, if the UE determines that the length of the CBR measurement window is N slots, and the UE determines that a start position of the timer for indicating the number of slots continuously monitored from the start of each DRX cycle is slot n according to the DTX configuration, a start position of the CBR timer is slot n-N, and an end position of the CBR timer is slot n-1. The advantage of introducing the timer is that since various modules of the UE have different capabilities, when the UE converts from a go-to-sleep state (inactive state) to the active state, various modules (such as transmission/reception/measurement module, etc.) may need different processing times, and generally, the transmission module and the receiving module need a longer processing time, so the UE may activate the measurement module earlier and continue to process the transmission/reception module while measuring during the CBR measurement timer. Therefore, a length of the CBR measurement timer (or other timers for measurement) may also be determined based on UE capability.

The active state means that, the UE may perform at least one of the following in this state: (sidelink) channel busy ratio ((SL-)CBR) measurement, (sidelink) reference signal received power ((SL-)RSRP) measurement, (sidelink) received signal strength indication ((SL-)PSSI) measurement, sidelink channel sensing, PSCCH reception, PSSCH reception, PSFCH reception, PSCCH transmission, PSSCH transmission, and PSFCH transmission. In an example, according to a (pre)configuration or base station configuration, when the UE is in the active state, the UE may perform any of the above; when the UE is in the inactive state, the UE cannot perform the PSCCH reception, PSSCH reception, PSFCH reception, PSCCH transmission, PSSCH transmission, PSFCH transmission, but may perform the (SL-)CBR measurement, (SL-)RSRP measurement, and (SL-)RSSI measurement. The method for the UE to decide whether it is in the active state or inactive state may use any method in the existing or future DRX technology, for example whether the DRX timer onDurationTimer is active or not, and whether the InactivityTimer is active.

Generally, the UE ensures that a sum of CRs below any priority does not exceed a CR limit parameter corresponding to the priority before transmitting the PSSCH, so it needs to determine its own CR. For example, if the UE transmits the PSSCH in slot n, it needs to determine its own CR within a range of slots [n-a, n+b]. Similar to the CBR measurement, the determination of the CR after the UE acquires the power saving configuration may also be affected by whether the UE is in the active state; accordingly, the UE needs to recalculate a slot range [n-a', n+b'] for determining the CR, and determine that on any slot in [n-a', n+b'], whether the slot may be used for determining the CR if the UE is in the active state and/or inactive state.

In some implementations, the method shown in FIG. 7 may further include: determining a total length of resource ranges for the measurement associated with the sidelink channel; determining one of the one or more resource ranges as a first resource range for the measurement associated with the sidelink channel; and determining a second resource range for the measurement associated with the sidelink channel based on the total length and the first resource range, wherein the total length is a sum of a length of the first resource range and a length of the second resource range.

For example, in some implementations, the method for the UE to determine the slot range [n-a', n+b'] may use any method or a combination of methods for determining the CBR measurement window by the UE as described above. Further, the UE may determine a first slot range [n-a', n-1] and/or a second slot range [n, n+b'], for example, which may include at least one of:

determining the first slot range and/or the second slot range by using any method or the combination of methods for determining the CBR measurement window by the UE as described above, wherein different determination methods may be used for the first slot range and the second slot range;

determining the first slot range [n-a', n-1] and/or the second slot range [n, n+b'] by using any other present or future method;

determining a total length of the slot range [n-a', n+b'] or a total number of slots for determining the CR, and determining one of the determined first slot range [n-a', n-1] and second slot range [n, n+b'] according to the total length/total number and the other of the determined first slot range [n-a', n-1] and second slot range [n, n+b'].

In this implementation, n-1 or n may also be replaced by n, n+1, or n+X, where X is any (pre)configured integer.

The advantage of dividing the time range for determining the CR into two parts is that the UE may be in the inactive state or active state in the first slot range, but it is more likely to be in the active state in the second slot range because transmission has begun, so different mechanisms being used in the two slot ranges may be applicable to different actual cases respectively, and the accuracy of the determined CR will not be affected by appropriately simplifying the processing of the second slot range.

Generally, in the DTX configuration for uplink and downlink communication, a plurality of timers are used to indicate a number of sub-frames in which the UE keeps active after different conditions are satisfied. For example, the drx-InactivityTimer indicates a number of PDCCH subframes that are continuously in the active state after the UE successfully decodes a PDCCH indicating UL/DL data of initial transmission. Every time the UE successfully decodes the PDCCH indicating the UL/DL data of initial transmission, the timer will be started/reset. A drx-RetransmissionTimer indicates a number of PDCCH subframes continuously monitored from a subframe in which the UE expects to receive DL retransmission.

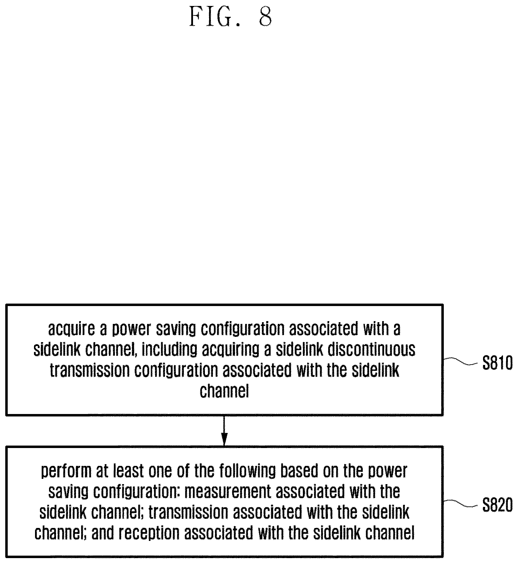

FIG. 8 illustrates a flowchart of another example power saving method according to an embodiment of the present disclosure. As shown in FIG. 8, in step S810, a power saving configuration associated with a sidelink channel may be acquired, including acquiring a sidelink discontinuous transmission configuration associated with the sidelink channel; and in step S820, at least one of the following is performed based on the power saving configuration: measurement associated with the sidelink channel; transmission associated with the sidelink channel; and reception associated with the sidelink channel.

In an embodiment, additionally or alternatively, in a sidelink DTX configuration, a plurality of different timers may be similarly used to indicate whether a UE may receive/transmit/measure a specific signal/channel, or to indicate an active period and an inactive period of the reception/transmission/measurement of the specific signal/channel, respectively. The inactive period corresponding to the reception/transmission/measurement of the specific signal/channel (measurement of the specific signal/channel or specific measurement, e.g., CBR measurement/CR measurement) is the time other than the active period corresponding to the reception/transmission of the specific signal/channel, and the corresponding active period includes at least one of:

a time when a timer corresponding to the transmission of the specific sidelink signal/channel is running;

a time when a timer corresponding to the reception of the specific sidelink signal/channel is running;

a time when a timer corresponding to the measurement of the specific sidelink signal/channel (or specific measurement, such as CBR measurement /CR measurement) is running;

a time when it is scheduled and/or selects by itself to perform the transmission of the specific sidelink signal/channel;

a time when it is scheduled and/or selects by itself to perform the reception of the specific sidelink signal/channel;

a time when it is scheduled and/or selects by itself to perform the measurement of the specific sidelink signal/channel;

a time when there is data arrival at a higher layer of the UE or data exists in a HARQ cache and a latest transmission time satisfying a delay requirement of the data being earlier than a next active period;

a time when there is data arrival at a higher layer of the UE or data exists in a HARQ cache and a latest transmission time satisfying a delay requirement of the data is earlier than a next active period.

In other words, the UE may be considered to be in the active period when at least one of the following conditions is satisfied:

a timer corresponding to the transmission of the specific sidelink channel being running;

a timer corresponding to the reception of the specific sidelink channel being running;

a timer corresponding to the measurement of the specific sidelink channel (or specific measurement, e.g., CBR measurement/CR measurement) is running;

the transmission of the specific sidelink channel (scheduled and/or for selecting resources by itself) being performed;

the reception of the specific sidelink channel (scheduled and/or for selecting resources by itself) being performed;

the measurement of the specific sidelink channel (scheduled and/or for selecting resources by itself) being performed;

there being data arrival at a higher layer or data existing in a hybrid automatic repeat request cache; and

there being data arrival at a higher layer or data existing in a hybrid automatic repeat request cache and a latest transmission time satisfying a delay requirement of the data being earlier than a next active period.

The UE being scheduled includes being scheduled by a base station and/or being scheduled by other UEs. For example, the base station schedules the UE to transmit a PSSCH on specific resources in Mode 1; for example, a target ID indicated by other sidelink UEs in a PSCCH is the UE (or broadcast ID) and the other sidelink UEs indicate reserved PSSCH resources, and it may be understood that other sidelink UEs schedules the UE to receive the PSSCH on the reserved resources. The transmission may include initial transmission and/or retransmission.

In some implementations, the sidelink DTX configuration acquired by the UE may include one or more timers corresponding to reception and/or transmission of at least one of the following signals/channels: a physical downlink control channel (PDCCH), a physical downlink shared channel (PDSCH), a physical uplink control channel (PUCCH), a physical uplink shared channel (PUSCH), a physical sidelink control channel (PSCCH), a physical sidelink shared channel (PSSCH), a physical sidelink feedback channel (PSFCH), a sidelink synchronization signal block (S-SSB), and a physical sidelink broadcast channel (PSBCH). The sidelink signals/channels of the above signals/channels further include LTE sidelink signals/channels and/or NR sidelink signals/channels. In this implementation, in an inactive period corresponding to transmission/reception of a certain sidelink signal/channel, the UE should not perform the transmission/reception of the signal/channel. For example, if the base station schedules PSSCH resources in an inactive period of PSSCH transmission (for example, a timer corresponding to PSSCH transmission is not running) for the UE, the UE should not transmit on the PSSCH resources.

In a specific example, the sidelink DTX configuration acquired by the UE may include one or more of the following timers: a timer corresponding to reception of the PDCCH; a timer corresponding to transmission of the PUCCH; a timer corresponding to reception of an NR PSCCH; a timer corresponding to reception of an NR PSSCH; a timer corresponding to transmission of the NR PSSCH; a timer corresponding to reception of an NR PSFCH; a timer corresponding to transmission of the NR PSFCH; a timer corresponding to reception of a LTE PSCCH and the PSSCH; a timer corresponding to transmission of the LTE PSCCH and the PSSCH; and a timer corresponding to reception of an NR S-SSB and the PSBCH.

In some implementations, reception or transmission of certain specific signals/channels may be independent of the sidelink DTX configuration. For example, transmission of any sidelink channel of the UE scheduled in Mode 1 is independent of the sidelink DTX configuration, that is, the base station may schedule sidelink resources in a DTX inactive period for the UE; transmission of any sidelink channel of the UE selected by itself in Mode 2 needs to be determined based on the DTX configuration, that is, the UE needs to select resources during DTX activation in Mode 2.

In some implementations, information dynamically scheduled by the base station may overwrite a state of the DTX configuration acquired by the UE. For example, when the transmission of any sidelink channel of the UE scheduled in Mode 1 is in an inactive period corresponding to the channel, the scheduling information overwrites an inactive period of the DTX configuration, and the UE considers that the sidelink channel may still be transmitted/received on the scheduled resources.

In some implementations, the UE acquiring the power saving configuration may include acquiring a plurality of discontinuous transmission configurations associated with a specific channel, for example, the UE may acquire more than one DTX configuration, for example, the UE acquires the sidelink DTX configuration and an uplink and downlink DTX (DRX) configuration, for another example, the UE acquires a DTX configuration from one or more base stations and/or a DTX configuration from one or more sidelink UEs. An active period of the specific channel may be determined based on at least one of: determining an intersection of active periods of the specific channel indicated by each of the plurality of discontinuous transmission configurations as the active period of the specific channel; determining a union of active periods of the specific channels indicated by each of the plurality of discontinuous transmission configurations as the active period of the specific channel; determining, in the plurality of discontinuous transmission configurations, active periods of the specific channel indicated by each discontinuous transmission configuration as the active period of the specific channel in a specific system corresponding to the discontinuous transmission configuration; and determining an active period corresponding to a specific node as the active period of the specific channel in a case where the specific channel is associated with the specific node. For example, for a specific sidelink or uplink/downlink signal/channel, when its corresponding DTX information is included in the more than one DTX configuration acquired by the UE, the UE may determine an active period of the signal/channel according to at least one of:

the active period of the signal/channel being an intersection of active periods of the signal/channel indicated by each DTX configuration in the more than one DTX configuration. For example, if the UE acquires the sidelink DTX configuration in which a time indicating that the PDCCH is in an active period is slots [0, 32] and acquires the uplink and downlink DTX configuration in which a time indicating that the PDCCH is in the active period is slots [16, 40], the UE may consider that the PDCCH is in the active period in slots [16, 32];

the active period of the signal/channel being a union of active periods of the signal/channel indicated by each DTX configuration in the more than one DTX configuration. For example, if the UE acquires the sidelink DTX configuration in which a time indicating that the PDCCH is in an active period is slots [0, 32] and acquires the uplink and downlink DTX configuration in which a time indicating that the PDCCH is in the active period is slots [16, 40], the UE may consider that the PDCCH is in the active period in slots [0, 40];

using an active period corresponding to a specific system when the signal/channel is used for the system. For example, if the UE acquires the sidelink DTX configuration in which a time indicating that the PDCCH is in an active period is slots [0, 32], and acquires the uplink and downlink DTX configuration in which a time indicating that the PDCCH is in the active period is slots [16, 40], the UE considers that a PDCCH indicating sidelink transmission is in the active period in slots [0, 32] and a PDCCH indicating uplink and downlink transmission is in the active period in slots [16, 40]. Accordingly, the UE decodes the PDCCH in slots [0, 40], but only attempts to decode a PDCCH format for scheduling the sidelink transmission in slots [0, 16], only attempts to decode a PDCCH format for scheduling the uplink and downlink transmission in slots [32, 40], and attempts to decode a PDCCH format for scheduling the sidelink transmission and the uplink and downlink transmission in slots [16, 32].

using an active period corresponding to a specific node for a signal/channel transmitted to the node and/or reception of a signal/channel from the node, when the signal/channel is from the specific node. For example, UE-C acquires a sidelink DTX configuration from other sidelink node UE-A and a sidelink DTX configuration from other sidelink node UE-B, wherein if the sidelink DTX configuration of UE-A indicates that a time when the sidelink channel (e.g., PSCCH and PSSCH, or PSCCH and PSSCH and PSFCH) is in an active period is slots [0, 32], and the sidelink DTX configuration of UE-B indicates that a time when the sidelink channel is in an active period is slots [16, 40], UE-C considers that transmission of the sidelink channel to UE-A or reception of the sidelink channel from UE-A is in an active period in slots [0, 32], and transmission of the sidelink channel to UE-B or reception of the sidelink channel from UE-B is in an active period in slots [16, 40]. Optionally, UE-C decodes the sidelink channel in slots [0, 40], but only attempts to decode the sidelink channel from UE-A in slots [0, 16], only attempts to decode the sidelink channel from UE-B in slots [32, 40], and attempts to decode the sidelink channels from UE-A and UE-B in slots [16, 32].

In some implementations, the UE may acquire more than one DTX configuration, and at least one DTX configuration includes a timer that is reset when a specific condition is satisfied. If multiple DTX configurations include the timer that may be reset for (transmission/reception/measurement of) the same signal/channel, the method for determining to reset the timer by the UE may include at least one of:

a condition for resetting the timer being a union of conditions for resetting the timer in each DTX configuration in the more than one DTX configuration. For example, it is assumed that the UE acquires the sidelink DTX configuration and the uplink and downlink DTX configuration, both of which indicates Inactivity Timer, and a reset condition for the timer is successful decoding of a PDCCH, the UE resets the timer after decoding a PDCCH format scheduling the sidelink transmission or the uplink and downlink transmission;

a condition for resetting the timer being an intersection of conditions for resetting the timer in each DTX configuration in the more than one DTX configuration. For example, it is assumed that the UE acquires the sidelink DTX configuration and the uplink and downlink DTX configuration, both of which indicates Inactivity Timer, and a reset condition for the timer is successful decoding of a PDCCH, the UE resets the timer after decoding a PDCCH format scheduling the sidelink transmission and a PDCCH format scheduling the uplink and downlink transmission;

using a condition for resetting the timer corresponding to a specific system when the timer is used for the system. For example, it is assumed that the UE acquires the sidelink DTX configuration and the uplink and downlink DTX configuration, both of which indicates Inactivity Timer, a reset condition for Inactivity Timer of uplink and downlink is successful decoding of a PDCCH, and a reset condition for Inactivity Timer of sidelink is successful decoding of a PSCCH or PSSCH (optionally, decoding of a PSSCH/PSCCH, a target ID indicated by which corresponds to the UE's ID or a broadcast ID), the UE resets the Inactivity Timer of uplink and downlink after decoding a PDCCH format scheduling the uplink and downlink transmission, and resets the Inactivity Timer of the sidelink after decoding a PSCCH/PSSCH (optionally, after decoding a PSSCH/PSCCH, a target ID indicated by which corresponds to the UE's ID or a broadcast ID);

using a condition for resetting the timer corresponding to a DTX configuration of a specific node when the signal/channel is from the node. For example, UE-C acquires a sidelink DTX configuration from other sidelink node UE-A and a sidelink DTX configuration from other sidelink node UE-B, both of which indicate Inactivity Timer, wherein a reset condition of Inactivity Timer indicated by UE-A is to successfully decode a PSCCH or PSSCH (optionally, decode a PSSCH/PSCCH from UE-A and/or a target ID indicated by which corresponds to the UE's ID or a broadcast ID), a reset condition of Inactivity Timer indicated by UE-B is to successfully decode a PSCCH/PSSCH/PSFCH (optionally, decode a PSSCH/PSCCH from UE-B and/or a target ID indicated by which corresponds to the UE's ID or a broadcast ID; or decode a PSFCH from UE-B and/or corresponding to PSCCH/PSSCH transmission of the UE-C), UE-C resets Inactivity Timer corresponding to UE-A after successfully decoding a PSCCH or PSSCH (optionally, decoding a PSSCH/PSCCH from UE-A and/or a target ID indicated by which corresponds to UE-C's ID or a broadcast ID) and resets Inactivity Timer corresponding to UE-B after successfully decoding a PSCCH/PSSCH/PSFCH (optionally, after decoding a PSSCH/PSCCH from UE-B and/or a target ID indicated by which corresponds to the UE's ID or a broadcast ID; or decoding a PSFCH from UE-B and/or corresponding to PSCCH/PSSCH transmission of the UE-C).

In some implementations, the UE may acquire more than one DTX configuration, wherein a continuous total length of active periods, or a total length within a cycle, or a total length within a specific time of the more than one DTX configuration does not exceed a threshold value. After reaching the threshold value, the UE enters a go-to-sleep state (inactive period) regardless of whether it should be in an active period based on the DTX configuration. Any of the cycle, threshold value and specific time may be (pre)configured/configured by the base station. The advantage of the limitation is to avoid the excessive power consumption caused by the UE waking up continuously for too long time.

Sidelink communication is divided into two communication modes of Mode 1 in which the base station schedules sidelink resources for the UE and Mode 2 in which the UE selects resources in a resource pool by itself. For mode 1, the UE's behaviors of receiving the sidelink resources scheduled by the base station through downlink channels, reporting to the base station, transmission on the acquired sidelink resources scheduled by the base station, and reception on the sidelink resources may also be affected by the power saving configuration.

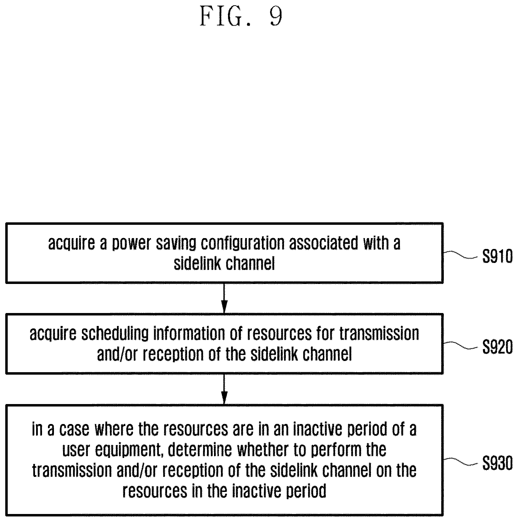

FIG. 9 illustrates a flowchart of another example power saving method according to an embodiment of the present disclosure. As shown in FIG. 9, in step S910, a power saving configuration associated with a sidelink channel may be acquired; in step S920, scheduling information of resources for transmission and/or reception of the sidelink channel may be acquired; and in step S930, in a case where the resources are in an inactive period of a user equipment, whether to perform the transmission and/or reception of the sidelink channel on the resources in the inactive period may be determined.

Specifically, in some implementations, the UE acquires the scheduling information from a base station, which may be carried in a PDCCH (e.g., PDCCH format for sidelink transmission) or a PDSCH (e.g., RRC signaling), wherein the scheduling information schedules the resources for sidelink transmission for the UE, which may be in the inactive period of the UE. The UE determines whether to perform the sidelink transmission on the scheduled resources in the inactive period according to at least one of:

a physical layer/higher layer priority corresponding to the sidelink transmission, e.g., a priority indicated in SCI or a priority indicated by a higher layer to a physical layer. For example, when the priority is higher than a threshold value (a value of the priority is lower than the threshold value in the physical layer, because a smaller value corresponds to a higher priority), the UE performs the sidelink transmission on the scheduled resources in the inactive period, otherwise it does not perform transmission;

a delay requirement corresponding to the sidelink transmission. For example, when a latest transmission time allowed by the delay requirement corresponding to the sidelink transmission is earlier than a next active period, the UE performs the sidelink transmission on the scheduled resources in the inactive period, otherwise it does not perform transmission;

a type of a channel corresponding to the sidelink transmission. For example, the UE cannot transmit a PSCCH/PSSCH of NR on the scheduled resources in the inactive period, but can transmit a PSFCH/SSB/PSBCH or a PSCCH/PSSCH of LTE.

A typical application scenario of the method is that the base station configures a smaller PDCCH active period for the UE, and the UE decodes a PDCCH in the active period and receives sidelink resources scheduled by the PDCCH, wherein a range in which the sidelink resources are located may be larger, for example, outside a range of a PDCCH active period. Therefore, in the method, the overhead of the UE decoding the PDCCH is saved through the smaller PDCCH active period, and the flexibility of Mode 1 scheduling is guaranteed by allowing a larger scheduling range. Another typical application scenario is that the UE acquires the sidelink resources scheduled by the PDCCH in the PDCCH active period or a sidelink channel active period, but due to transmission failure, it needs to acquire sidelink resources for retransmission here and initiate the retransmission. Available retransmission resources after repeating several times have exceeded a time range of the active period, but if the retransmission is stopped under the influence of DTX at this time, previous retransmission will be wasted, which will affect the system performance and cause unnecessary overhead; therefore, the UE is allowed to acquire resources for transmitting sidelink data outside the active period to improve the system performance.

In some implementations, the power saving method according to the embodiment of the present disclosure further includes: starting a specific discontinuous transmission timer if the transmission and/or reception of the sidelink channel is performed on the resources in the inactive periods, and determining, within a running time of the specific discontinuous transmission timer, the user equipment as being in the active period.

For example, in some implementations, if the UE performs the sidelink transmission/reception on the resources scheduled by the base station or resources selected by itself in the inactive period, it starts or resets a DTX timer, wherein within a duration of the timer, it is considered to be in the active period. The DTX timer may be the same timer corresponding to the sidelink transmission/reception in the active period, or may be an independent timer dedicated to the inactive period.

In some implementations, the power saving method according to the embodiment of the present disclosure further includes: acquiring scheduling information associated with the sidelink channel that indicates a specific discontinuous transmission timer, and determining, within a running time of the specific discontinuous transmission timer, the user equipment as being in the active period.

For example, In some implementations, the UE acquires the scheduling information from the base station, which may be carried in the PDCCH (e.g., PDCCH format for sidelink transmission) or the PDSCH (e.g., RRC signaling), wherein the scheduling information schedules the resources for sidelink reception for the UE, which may be in the inactive period of the UE; and/or, the scheduling information indicates a DTX timer or indicates that a DTX timer is reset, wherein the UE is in the active period within a time when the timer runs.

In some implementations, the UE may determine that the resources scheduled by the scheduling information from the base station are used for the sidelink transmission, and/or the resources scheduled by the scheduling information from the base station are used for the sidelink reception, and/or what indicated in the scheduling information from the base station is a DTX timer, and/or what indicated in the scheduling information from the base station is that a DTX timer is reset by at least one of:

a specific DCI format. For example, resources scheduled in DCI format 3-0 are used for the sidelink transmission, resources scheduled in DCI format 3-2 are used for the sidelink transmission, and a DTX timer is indicated in DCI format 3-3;

a reserved bit in a specific DCI format, and/or a specific value of a specific domain in a specific DCI format. The specific DCI format may be an existing or newly added DCI format;

a specific domain in a DCI format. The DCI format may be an existing or newly added DCI format. The specific domain may be a newly introduced domain, or reuse an existing domain and reinterpret the meaning of its value.

Since the base station in the specification may also be replaced by other nodes, a typical application scenario of the method is that the base station provides the UE with a DTX configuration used in the UE's own transmission and uplink/downlink transceiving by RRC signaling semi-statically, and other sidelink nodes provide the UE with a DTX configuration for receiving transmission of the other sidelink nodes semi-statically or dynamically by RRC or physical layer signaling. The method may enable multiple nodes to interact with their DTX configurations, thus ensuring that nodes with communication requirement keep active at the same time, without introducing a larger active period to increase power consumption, and without requiring one node (e.g., base station) to determine the DTX configuration based on active periods of all the multiple nodes to increase complexity.

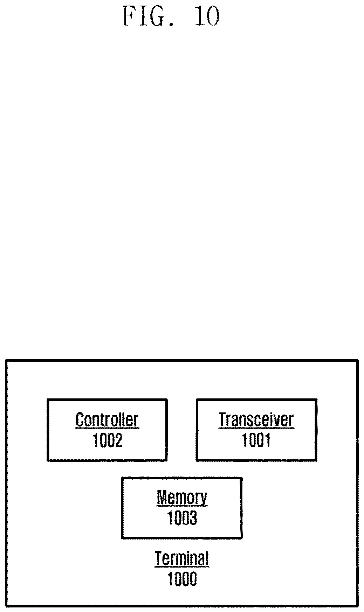

FIG. 10 illustrates a block diagram of a configuration of a terminal according to various embodiments of the present disclosure.

Referring to FIG. 10, a terminal 1000 according to various embodiments of the present disclosure may include a transceiver 1001, and a processor 1002. Preferably, the terminal may further include a memory 1003. For example, the transceiver 1001 may be configured to transmit and receive signals. For example, the processor 1002 may be coupled to the transceiver 1001, and may be configured to control the transceiver 1001 to perform the methods according to the embodiments of the present disclosure. For example, the memory 1003 may store instructions executable by the processor 1002 that, when executed by the processor 1002, cause the processor 1002 to perform the aforementioned methods.

Although the terminal is illustrated as having separate functional blocks for convenience of explanation, the configuration of the terminal 1000 is not limited thereto. For example, the terminal 1000 may include a communication unit consisting of a transceiver and a processor. The terminal 1000 may communicate with at least one network node by means of the communication unit.

An embodiment of the present disclosure further provides a computer-readable medium having computer-readable instructions stored thereon that, when executed by a processor, may be used to implement the methods according to the embodiments of the present disclosure.

Various embodiments of the disclosure may be implemented as computer readable codes embodied on a computer readable recording medium from a specific perspective. The computer readable recording medium is any data storage device that may store data readable by a computer system. An example of the computer readable recording medium may include a read-only memory (ROM), a random access memory (RAM), a compact disk read-only memory (CD-ROM), a magnetic tape, a floppy disk, an optical data storage device, a carrier wave (e.g., data transmission via an Internet), and the like. Computer readable recording media may be distributed by computer systems connected via a network, and thus the computer readable codes may be stored and executed in a distributed manner. Furthermore, functional programs, codes, and code segments for implementing various embodiments of the disclosure may be easily explained by those skilled in the art to which the embodiments of the disclosure are applied.

It will be understood that the embodiments of the disclosure may be implemented in a form of hardware, software, or a combination of hardware and software. Software may be stored as program instructions or computer readable codes executable on a processor on a non-transitory computer readable medium. An example of the non-transitory computer readable recording medium includes a magnetic storage medium (e.g., a ROM, a floppy disk, a hard disk, etc.) and an optical recording medium (e.g., a CD-ROM, a digital video disk (DVD), etc.). Non-transitory computer readable recording media may also be distributed on computer systems coupled by a network, so that the computer readable codes are stored and executed in a distributed manner. The medium can be read by a computer, stored in a memory, and executed by a processor. Various embodiments may be implemented by a computer or a portable terminal including a controller and a memory, and the memory may be an example of a non-transitory computer readable recording medium suitable for storing program(s) having instructions to implement the embodiments of the disclosure. The disclosure may be realized by a program having codes for specifically implementing the apparatus and method described in the claims, which is stored in a machine (or computer) readable storage medium. The program may be electronically carried on any medium, such as a communication signal transferred via a wired or wireless connection, and the disclosure suitably includes equivalents thereof.

At least part of the apparatus (e.g., modules or functions thereof) or the method (e.g., operations) according to various embodiments of the present disclosure may be implemented by an instruction which is stored in a computer-readable storage medium (e.g., the memory) in a form of a program module. When executed by a processor or controller, the instruction may enable the processor or controller to perform corresponding functions. The computer-readable medium may include, for example, a hard disk, a floppy disk, a magnetic media, an optical recording media, a DVD, a magneto-optical media, and the like. The instructions may include a code made by a compiler or a code which can be executed by an interpreter. The module or apparatus according to various embodiments of the present disclosure may include at least one or more of the aforementioned elements, some of the aforementioned elements may be omitted, or may further include other additional elements. Operations executed by the module, program module, or other elements according to various embodiments of the present disclosure may be executed sequentially, in parallel, repeatedly, or in a heuristic way. Alternatively, at least some operations may be executed in a different order or may be omitted, or other operations may be added.

What has been described above are only example embodiments of the present invention, and are not intended to limit the scope of protection of the present invention, which is determined by the appended claims.

Aspects of the invention can also be learned from the below clauses.

Clause 1: A measurement method in a wireless communication system, the method comprising:

receiving, by a first UE, a signal or channel from a second UE;
measuring, by the first UE, the signal or channel when the signal or channel is measurable to determine a relay node; and
determining, by the first UE, whether to select the second UE as the relay node and/or whether to continue to use the second UE as the relay node according to a measurement result.

Clause 2: The method of clause 1, further comprising:

determining, by the first UE, whether the signal or channel is measurable to determine the relay node,
wherein the determining, by the first UE, whether the signal or channel is measurable to determine the relay node comprising using at least one of the following methods to determine whether the signal or channel is measurable to determine the relay node:

determining based on a resource pool;
determining based on an identity of the second UE;
determining based on a resource in which the signal or channel is received;
determining based on an indication carried in or corresponding to the signal or channel;
determining based on a type of the signal or channel; and
determining based on a selected relay node.

Clause 3: The method of clause 2, wherein the indication carried in or corresponding to the signal or channel includes at least one of:

an indication in RRC signaling;
an indication in MAC signaling;
an indication based on an SCI format;
an indication field in SCI; and
a sequence for scrambling.

Clause 4: The method of clause 1, further comprising:

triggering, by the first UE, the second UE to transmit the signal or channel for measurement of the relay node; and
determining ,by the first UE, that the signal or channel is measurable to determine the relay node after receiving the signal or channel that the second node is triggered to transmit.

Clause 5: The method of clause 1, wherein the signal or channel includes at least one signal or channel of the following signals or channels:

a reference signal of a PSCCH, a reference signal of a PSSCH, an S-SSB, a PSBCH block, a reference signal of the PSBCH block, the PSCCH, the PSSCH and a PSFCH, and
wherein the reference signal of the PSBCH block and/or the PSCCH and/or the PSSCH include at least one of:
a DMRS, a CSI-RS and a PT-RS.

Clause 6: The method of clause 5, wherein when a predetermined condition is satisfied, at least one behavior of the following behaviors is performed by the first UE:

measuring the reference signal and/or the SSB and/or the PSFCH, and obtaining measured RSRP and/or RSRQ; and
measuring any one or more of the at least one signal or channel, and obtaining measured RSSI.

Clause 7: The method of clause 6, wherein satisfying the predetermined condition includes at least one of:

the first UE being configured by a base station or a higher layer to perform the at least one behavior;
the first UE being preconfigured or predefined to perform the at least one behavior; and
the method of determining that the signal or channel is measurable to determine the relay node corresponding to the at least one behavior.

Clause 8: The method of clause 1, further comprising:

determining whether to select the second UE as the relay node and/or whether to continue to use the second UE as the relay node based on feedback information of transmission with the second UE,
wherein the feedback information includes at least one of: HARQ-ACK feedback, and CSI feedback.

Clause 9: The method of clause 1, further comprising:
transmitting, by the first UE, a determination result to a third node after determining whether to select the second UE as the relay node and/or whether to continue to use the second UE as the relay node.
Clause 10: The method of clause 9, wherein the third node includes at least one of:

the first UE itself;
the second UE;
other UEs supporting sidelink; and
a base station.

Clause 11: The method of clause 9, wherein a manner of transmitting the determination result to the third node comprises at least one of:

transmitting a control channel and/or SCI, and indicating the determination result in the control channel and/or SCI;
transmitting higher layer signaling, and indicating the determination result in the higher layer signaling; and
transmitting a PSFCH, and indicating the determination result in the PSFCH.

Clause 12: A measurement method in a wireless communication system, the method comprising:

generating, by a second UE, a signal or channel; and

transmitting, by the second UE, the signal or channel when the signal or channel is measurable by other nodes to determine a relay node.

Clause 13: A first UE in a wireless communication system, the first UE comprising:

a transceiver for transmitting and receiving signals; and
a processor configured to:

receive a signal or channel from a second UE,
measure the signal or channel when the signal or channel is measurable to determine a relay node, and
determine whether to select the second UE as the relay node and/or whether to continue to use the second UE as the relay node according to a measurement result.

Clause 14: A second UE in a wireless communication system, the second UE comprising:

a transceiver for transmitting and receiving signals; and
a processor configured to:

generate a signal or channel, and
transmit the signal or channel when the signal or channel is measurable by other nodes to determine a relay node.

**Claims**

1. A method performed by a user equipment, UE, in a communication system, the method comprising:

identifying a channel busy ratio, CBR, measurement window; and
measuring a sidelink, SL, CBR based on the CBR measurement window,
wherein a calculation of the SL CBR is limited within specific slots within the CBR measurement window, and
wherein the specific slots comprises slots for which an SL received signal strength indication, RSSI, is measured.

2. The method of claim 1, wherein the specific slots comprises slots where the UE performs channel sensing, a physical sidelink control channel, PSCCH, reception, and a physical sidelink shared channel, PSSCH, reception within the CBR measurement window.

3. The method of claim 1, further comprising acquiring configuration information for a power saving.

4. The method of claim 3, wherein the calculation of the SL CBR is limited within the specific slots within the CBR measurement window based on the configuration information.

5. The method of claim 1, wherein a sum of channel occupancy ratios, CRs, below any priority does not exceed a CR limit corresponding to the priority, and wherein the CR limit is associated with the priority and the SL CBR.

6. A user equipment, UE, in a communication system, the UE comprising:

a transceiver; and
a controller configured to:

identify a channel busy ratio, CBR, measurement window, and
measure a sidelink, SL, CBR based on the CBR measurement window,
wherein a calculation of the SL CBR is limited within specific slots within the CBR measurement window, and
wherein the specific slots comprises slots for which an SL received signal strength indication, RSSI, is measured.

7. The UE of claim 6, wherein the specific slots comprises slots where the UE performs channel sensing, a physical sidelink control channel, PSCCH, reception, and a physical sidelink shared channel, PSSCH, reception within the CBR measurement window.

8. The UE of claim 6, further comprising acquiring configuration information for a power saving.

9. The UE of claim 8, wherein the calculation of the SL CBR is limited within the specific slots within the CBR measurement window based on the configuration information.

10. The UE of claim 6, wherein a sum of channel occupancy ratios, CRs, below any priority does not exceed a CR limit corresponding to the priority, and wherein the CR limit is associated with the priority and the SL CBR.

# FIG. 1

FIG. 2A

```
                                                                    200
        ┌────────────────────────────────────────────────────────────────────┐
        │                                                                      │
        │        205        210       215       220       225       230        │
        │     ┌────────┐  ┌──────┐  ┌──────┐  ┌──────┐  ┌──────┐  ┌──────┐     │
Data         │Channel │  │      │  │ Size │  │      │  │ Add  │  │      │         To
Input  ───▶  │Coding  │─▶│S-to-P│─▶│  N   │─▶│P-to-S│─▶│Cyclic│─▶│  UC  │─▶    Channel
        │    │  &     │  │      │  │ IFFT │  │      │  │Prefix│  │      │     │
        │    │Modulation│ │      │  │      │  │      │  │      │  │      │     │
        │    └────────┘  └──────┘  └──────┘  └──────┘  └──────┘  └──────┘     │
        │                                                                      │
        └────────────────────────────────────────────────────────────────────┘
```

EP 4 447 547 A2

FIG. 2B

# FIG. 3A

# FIG. 3B

# FIG. 4

START

a first UE receives a signal or channel from
a second UE — S410

the first UE measures the signal or channel
when the signal or channel is measurable to
determine a relay node — S420

the first UE determines whether to select the
second UE as the relay node and/or
whether to continue to employ the second
UE as the relay node according to a
measurement result — S430

END

# FIG. 5

```
                    ┌────────────────┐
                    │     START      │
                    └────────────────┘
                             │
                             ▼
   ┌─────────────────────────────────────────────┐
   │                                             │
   │   a second UE generates a signal or channel │ ～ S510
   │                                             │
   └─────────────────────────────────────────────┘
                             │
                             ▼
   ┌─────────────────────────────────────────────┐
   │         the second UE transmits the signal or│
   │         channel when the signal or channel is│ ～ S520
   │       measurable by other nodes to determine a│
   │                   relay node                 │
   └─────────────────────────────────────────────┘
                             │
                             ▼
                    ┌────────────────┐
                    │      END       │
                    └────────────────┘
```

# FIG. 6

acquire a power saving configuration associated with a sidelink channel — S610

perform at least one of the following based on the power saving configuration: measurement associated with the sidelink channel; transmission associated with the sidelink channel; and reception associated with the sidelink channel — S620

# FIG. 7

| | |
|---|---|
| acquire a power saving configuration associated with a sidelink channel | S710 |
| ↓ | |
| determine resources to be used for transmitting the sidelink channel | S720 |
| ↓ | |
| determine one or more resource ranges for measurement associated with the sidelink channel based on the resources and the power saving configuration | S730 |
| ↓ | |
| perform the measurement on resources within the one or more resource ranges | S740 |

# FIG. 8

acquire a power saving configuration associated with a sidelink channel, including acquiring a sidelink discontinuous transmission configuration associated with the sidelink channel ~ S810

perform at least one of the following based on the power saving configuration: measurement associated with the sidelink channel; transmission associated with the sidelink channel; and reception associated with the sidelink channel ~ S820

# FIG. 9

acquire a power saving configuration associated with a sidelink channel — S910

acquire scheduling information of resources for transmission and/or reception of the sidelink channel — S920

in a case where the resources are in an inactive period of a user equipment, determine whether to perform the transmission and/or reception of the sidelink channel on the resources in the inactive period — S930

FIG. 10

| Controller 1002 | Transceiver 1001 |
| Memory 1003 |

Terminal 1000